# EUROPEAN PATENT SPECIFICATION

(11) **EP 2 894 614 B1**
(45) Date of publication and mention of the grant of the patent: **26.12.2018**
(21) Application number: 13834623.4
(22) Date of filing: 04.09.2013
(51) Int. Cl.: G08B 25/04, H04M 11/04, G08B 25/01

(54) **RESIDENTIAL SECURITY SYSTEM**
WOHNUNGSSICHERHEITSSYSTEM
SYSTÈME DE SÉCURITÉ RÉSIDENTIELLE

(30) Priority: 07.09.2012 JP 2012197870
(43) Date of publication of application: 15.07.2015
(73) Proprietor: Panasonic Intellectual Property Management Co., Ltd., Osaka-shi, Osaka 540-6207 (JP)
(72) Inventor: FUKUSHIMA, Minoru, Osaka-shi, Osaka 540-6207 (JP); WASHI, Teppei, Osaka-shi, Osaka 540-6207 (JP); MUROI, Yoshinori, Osaka-shi, Osaka 540-6207 (JP)
(74) Representative: Appelt, Christian W.
(86) International application number: PCT/JP2013/005238
(87) International publication number: WO 2014/038199

(56) References cited:
- CA-A1- 2 704 244
- JP-A- 2002 305 577
- JP-A- 2004 194 111
- JP-A- 2005 352 956
- JP-A- 2007 148 697
- JP-A- 2007 323 533
- US-A1- 2011 074 570

## Description

### Technical Field

The present invention relates to residential security systems.

### Background Art

JP 2007-148697 A proposes a security system including a crime-prevention sensor for detecting an abnormality such as opening/closing and breaking of doors of buildings and an alarming means for providing alarm based on a detection result of the crime-prevention sensor.

In this security system, after a lapse of predetermined time from the time at which the alarming means sounds alarm, an e-mail is sent to a preliminarily set mail address, and thereby announcement is given to the outside area.

In the security system disclosed in JP 2007-148697 A, when the alarm is sounded, only the e-mail is sent to the preliminarily set mail address. Hence, even when a person receives the e-mail, the person cannot check situations of the place where the alarm is sounded and cannot understand what to do for such situations.

CA 2 704 244 A1 provides a security alarm system that can operate in disarmed, away armed, stay armed and alarm occurrence modes. The security intelligently combines with CCTV (Closed-circuit television (CCTV) is the use of video cameras to transmit a signal to a specific place, on a limited set of monitors) and appliances by the PLC (programmable logic controller) bus and communication bus.

### Summary of Invention

In view of the above insufficiency, the present invention has aimed to propose a residential security system allowing a user to know, in more detail, situations inside a residence from an outside of the residence in a case of occurrence of an abnormality in the residence.

The invention is defined in independent claim 1. Advantageous embodiments are subject to the dependent claims.

A residential security system in accordance with the invention, includes at least one sensor terminal, at least one audio announcement terminal, and a master which are installed in a same residence. The master is configured to communicate with the at least one sensor terminal, the at least one audio announcement terminal, and a preliminarily registered mobile phone. The at least one audio announcement terminal includes a speaker and a microphone. The at least one audio announcement terminal has two communication modes which are a reception mode of outputting, from the speaker, an audio signal received from the master, and a transmission mode of sending an audio signal generated by the microphone to the master. The at least one audio announcement terminal is configured to select one of the communication modes in accordance with a control signal from the master. The at least one sensor terminal is configured to provide information for judging occurrence of an abnormality regarding the residence, to the master. The master is configured to, when determining based on the information from the at least one sensor terminal that the abnormality has occurred, send an e-mail indicative of occurrence of the abnormality to the mobile phone and send a control signal for switching the at least one audio announcement terminal to the transmission mode to the at least one audio announcement terminal. The master is configured to, when receiving a command corresponding to a reception operation at the mobile phone, send the audio signal sent from the at least one audio announcement terminal in the transmission mode to the mobile phone.

Still according to the invention, the master is configured to: when receiving a command corresponding to a switching operation at the mobile phone after receiving a command corresponding to a reception operation at the mobile phone, send a control signal for switching the at least one audio announcement terminal to the reception mode to the at least one audio announcement terminal; when the at least one audio announcement terminal is switched to the reception mode, send an announcement signal to the mobile phone; and when receiving an audio signal from the mobile phone, send the audio signal received from the mobile phone to the at least one audio announcement terminal in the reception mode.

In the residential security system of another embodiment of the invention, the residential security system includes a plurality of audio announcement terminals. The master is configured to, in a process of sending, to the mobile phone, the audio signal sent from an audio announcement terminal in the transmission mode, select in turn one from the plurality of audio announcement terminals as the audio announcement terminal in the transmission mode, each time predetermined time elapses.

In the residential security system of another embodiment of the invention, the residential security system includes a plurality of audio announcement terminals. The master is configured to, when receiving a selection command corresponding to a selection operation of the at least one audio announcement terminal at the mobile phone after receiving a command corresponding to the switching operation at the mobile phone, send the control signal for switching the at least one audio announcement terminal to the reception mode to an audio announcement terminal designated by the received selection command.

In the residential security system of another embodiment of the invention, the residential security system includes a plurality of audio announcement terminals. The master is configured to, in a process of sending a control signal for switching at least one of the plurality of audio announcement terminals to the reception mode to at least one of the plurality of audio announcement terminals, send a control signal for switching at least one of the plurality of audio announcement terminals to the reception mode to each of the plurality of audio announcement terminals. The master is configured to, in a process of sending the audio signal received from the mobile phone to at least one of the plurality of audio announcement terminals, send the audio signal received from the mobile phone to each of the plurality of audio announcement terminals.

In the residential security system of another embodiment of the invention, the residential security system includes: a plurality of audio announcement terminals; and a plurality of human sensors individually associated with the plurality of audio announcement terminals. Each of the plurality of human sensors is configured to detect a person present around a location of an associated one of the plurality of audio announcement terminals. The master is configured to judge, based on each detection result from the plurality of human sensors, whether a person is present around each location. The master is configured to, in a process of sending a control signal for switching at least one of the plurality of audio announcement terminals to the transmission mode to at least one of the plurality of audio announcement terminals, send a control signal for switching at least one of the plurality of audio announcement terminals to the transmission mode, to an audio announcement terminal at a location which a person is judged to be present around.

In the residential security system of another embodiment of the invention, the master is configured to, when there are two or more audio announcement terminals each at a location which a person is judged to be present around, in a process of sending a control signal for switching at least one of the plurality of audio announcement terminals to the transmission mode to at least one of the plurality of audio announcement terminals, send a control signal for switching at least one of the plurality of audio announcement terminals to the transmission mode, to each of the two or more audio announcement terminals each at a location which a person is judged to be present around, and in a process of sending, to the mobile phone, the audio signal sent from an audio announcement terminal in the transmission mode, select in turn one from the two or more audio announcement terminals each at a location which a person is judged to be present around, as the audio announcement terminal in the transmission mode, each time predetermined time elapses.

In the residential security system of another embodiment of the invention, the at least one sensor terminal is configured to detect the abnormality. The at least one sensor terminal is configured to, when detecting occurrence of the abnormality, output an announcement signal to the master as the information. The master is configured to, when receiving the announcement signal from the at least one sensor terminal, determine that the abnormality has occurred.

In the residential security system of another embodiment of the invention, the at least one sensor terminal is a fire alarm configured to provide a warring sound when sensing a fire. The master is configured to, when receiving the announcement signal from the at least one sensor terminal, send a voice message for announcing occurrence of a fire to the at least one audio announcement terminal. The at least one audio announcement terminal is configured to, when receiving the voice message, output the voice message from the speaker.

In the residential security system of another embodiment of the invention, the at least one sensor terminal is a gas sensor configured to sense gas. The master is configured to, when receiving the announcement signal from the at least one sensor terminal, send a voice message to the at least one audio announcement terminal. The at least one audio announcement terminal is configured to, when receiving the voice message, output the voice message from the speaker.

In the residential security system of another embodiment of the invention, the at least one sensor terminal is a crime-prevention sensor configured to detect an intruder into the residence. The master is configured to, when receiving the announcement signal from the at least one sensor terminal, send a control command for outputting a menacing sound to the at least one audio announcement terminal. The at least one audio announcement terminal is configured to, when receiving the control command, output the menacing sound from the speaker.

In the residential security system of another embodiment of the invention, the residential security system includes a plurality of sensor terminals. Each of the plurality of sensor terminals is a temperature sensor configured to measure an ambient temperature. The information indicates the ambient temperatures measured by the plurality of sensor terminals. The master is configured to, when a difference between the ambient temperatures is greater than a predetermined threshold value and a maximum value or a minimum value of the ambient temperatures is out of a predetermined temperature range, determine that the abnormality has occurred, and send a control signal for outputting a warning sound to the at least one audio announcement terminal. The at least one audio announcement terminal is configured to, when receiving the control signal for outputting the warning sound, output the warning sound from the speaker.

In the residential security system of another embodiment of the invention, realized in combination with any one of the first to twelfth aspects, the at least one audio announcement terminal is a wall-mounted device including an engagement part to be engaged with a fixing fixed to a wall.

In the residential security system of another embodiment of the invention , the at least one audio announcement terminal is a pendant device including cord for hanging.

In the residential security system of another embodiment of the invention, the at least one audio announcement terminal is a stationary device to be placed on a support.

In the residential security system of another embodiment of the invention, the residential security system further includes a relay device configured to allow communication between a public telecommunication network to which the mobile phone is to be connected, and the master. The master is configured to function as the relay device.

In the residential security system of another embodiment of the invention, the at least one audio announcement terminal includes a wireless communication processor configured to send to and receive from the master the audio signal via wireless packet communications. The wireless communication processor includes a compression and decompression unit, an encryption and decryption processing unit, a packet processing unit, and a wireless transceiver unit. The wireless communication processor is configured to, when receiving a packet of the audio signal by the wireless transceiver unit, obtain the audio signal from the packet by the packet processing unit, and decrypt the audio signal by the encryption and decryption processing unit, and decompress the decrypted audio signal by the compression and decompression unit, and output the decompressed and decrypted audio signal from the speaker. The wireless communication processor is configured to, when the audio signal is produced by the microphone, compress the audio signal by the compression and decompression unit, and encrypt the compressed audio signal by the encryption and decryption processing unit, and packetize the encrypted and compressed audio signal by the packet processing unit, and send a packet of the encrypted and compressed audio signal by the wireless transceiver unit.

In the residential security system of another embodiment of the invention, the at least one audio announcement terminal is configured to set either a file transfer scheme of accumulating received audio signals until a total length of the received audio signals becomes equal to prescribed time and then outputting the accumulated audio signals, or a streaming scheme, as a receiving processing scheme for the audio signal sent from the master.

In the residential security system of another embodiment of the invention, the wireless communication processor further includes a buffering unit. The wireless communication processor is configured to, in the file transfer scheme, accumulate the audio signals decrypted by the encryption and decryption processing unit in the buffering unit, and when the total length of the audio signals accumulated in the buffering unit becomes equal to the prescribed time, read out the audio signals from the buffering unit and decompress the audio signals by the compression and decompression unit, and output the decompressed audio signals from the speaker.

In the residential security system of another embodiment of the invention, the wireless communication processor further includes a buffering unit. The wireless communication processor is configured to, in the streaming scheme, use the buffering unit as a ring buffer, and store the audio signal decrypted by the encryption and decryption processing unit in a predetermined region of the buffering unit based on a sequence number of a packet of the audio signal, and when a total amount of the audio signals accumulated in the buffering unit becomes equal to at least a maximum amount of jitter, read out the audio signals from the buffering unit in order from oldest, and decompress the audio signals by the compression and decompression unit, and output the decompressed audio signals from the speaker.

In the residential security system of another embodiment of the invention, the wireless communication processor further includes a packet loss calculator. The packet loss calculator is configured to calculate a probability of occurrence of packet loss in a reception process according to the streaming scheme. The at least one audio announcement terminal is configured to send the probability of occurrence of packet loss calculated by the packet loss calculator to the master.

In the residential security system of another embodiment of the invention, the wireless communication processor further includes an automatic sound volume adjuster. The automatic sound volume adjuster is configured to adjust each of an amplitude level of a reception audio signal which is the audio signal received from the master and an amplitude level of a transmission audio signal which is the audio signal generated by the microphone, to be in a predetermined range.

In the residential security system of another embodiment of the invention, the wireless communication processor further includes a packet loss compensator. The packet loss compensator is configured to, when the wireless transceiver unit fails to receive a packet of the audio signal, infer data of the audio signal contained in the packet which the wireless transceiver unit fails to receive, by use of data of the audio signal contained in the packet which the wireless transceiver unit succeeds in receiving.

### Brief Description of the Drawings

FIG. 1 is a schematic diagram illustrating a configuration of the residential security system of one embodiment in accordance with the present invention.
FIG. 2 is a block diagram illustrating the audio announcement terminal used in the from the master.

In the residential security system of the nineteenth aspect in accordance with the present invention, realized in combination with the eighteenth aspect, the wireless communication processor further includes a buffering unit. The wireless communication processor is configured to, in the file transfer scheme, accumulate the audio signals decrypted by the encryption and decryption processing unit in the buffering unit, and when the total length of the audio signals accumulated in the buffering unit becomes equal to the prescribed time, read out the audio signals from the buffering unit and decompress the audio signals by the compression and decompression unit, and output the decompressed audio signals from the speaker.

In the residential security system of the twentieth aspect in accordance with the present invention, realized in combination with the eighteenth aspect, the wireless communication processor further includes a buffering unit. The wireless communication processor is configured to, in the streaming scheme, use the buffering unit as a ring buffer, and store the audio signal decrypted by the encryption and decryption processing unit in a predetermined region of the buffering unit based on a sequence number of a packet of the audio signal, and when a total amount of the audio signals accumulated in the buffering unit becomes equal to at least a maximum amount of jitter, read out the audio signals from the buffering unit in order from oldest, and decompress the audio signals by the compression and decompression unit, and output the decompressed audio signals from the speaker.

In the residential security system of the twenty-first aspect in accordance with the present invention, realized in combination with the eighteenth or twentieth aspect, the wireless communication processor further includes a packet loss calculator. The packet loss calculator is configured to calculate a probability of occurrence of packet loss in a reception process according to the streaming scheme. The at least one audio announcement terminal is configured to send the probability of occurrence of packet loss calculated by the packet loss calculator to the master.

In the residential security system of the twenty-second aspect in accordance with the present invention, realized in combination with any one of the seventeenth to twenty-first aspects, the wireless communication processor further includes an automatic sound volume adjuster. The automatic sound volume adjuster is configured to adjust each of an amplitude level of a reception audio signal which is the audio signal received from the master and an amplitude level of a transmission audio signal which is the audio signal generated by the microphone, to be in a predetermined range.

In the residential security system of the twenty-third aspect in accordance with the present invention, realized in combination with any one of the seventeenth to twenty-second aspects, the wireless communication processor further includes a packet loss compensator. The packet loss compensator is configured to, when the wireless transceiver unit fails to receive a packet of the audio signal, infer data of the audio signal contained in the packet which the wireless transceiver unit fails to receive, by use of data of the audio signal contained in the packet which the wireless transceiver unit succeeds in receiving.

### Brief Description of the Drawings

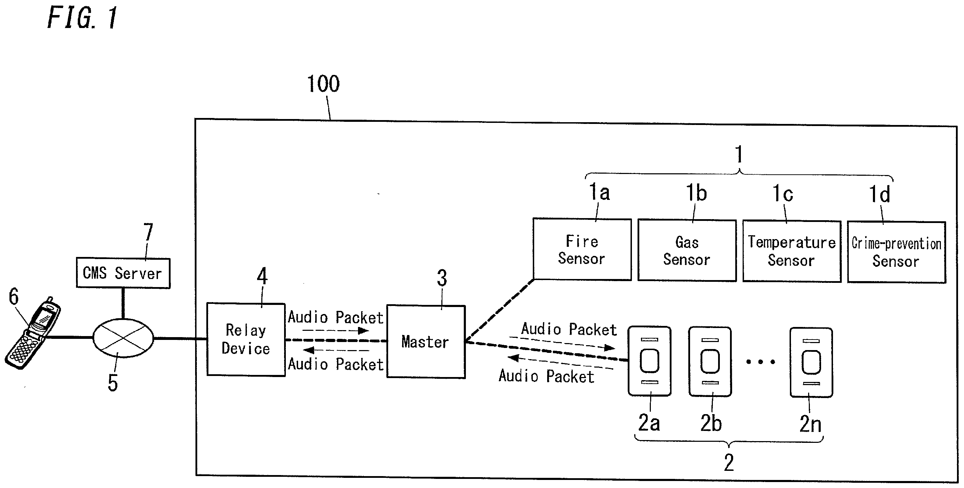

**FIG. 1** is a schematic diagram illustrating a configuration of the residential security system of one embodiment in accordance with the present invention.

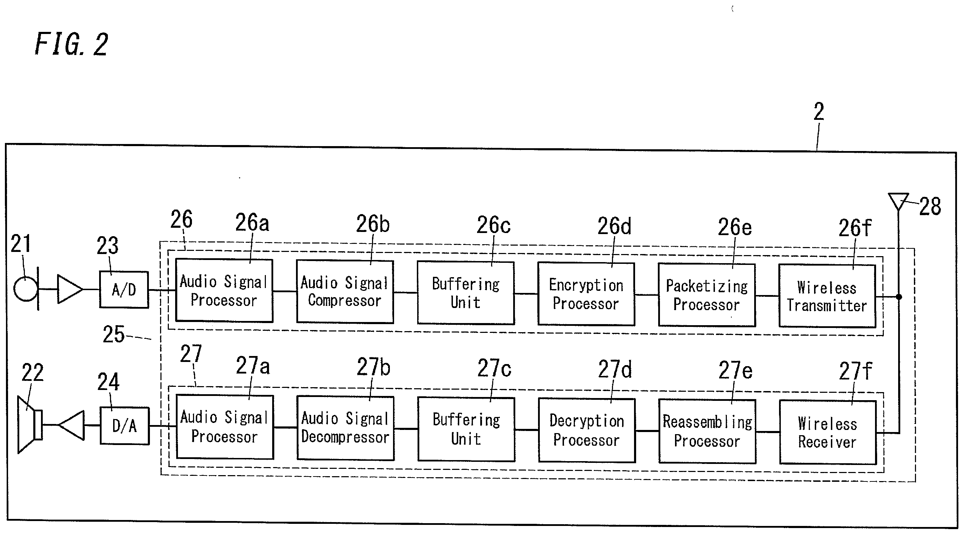

**FIG. 2** is a block diagram illustrating the audio announcement terminal used in the residential security system.

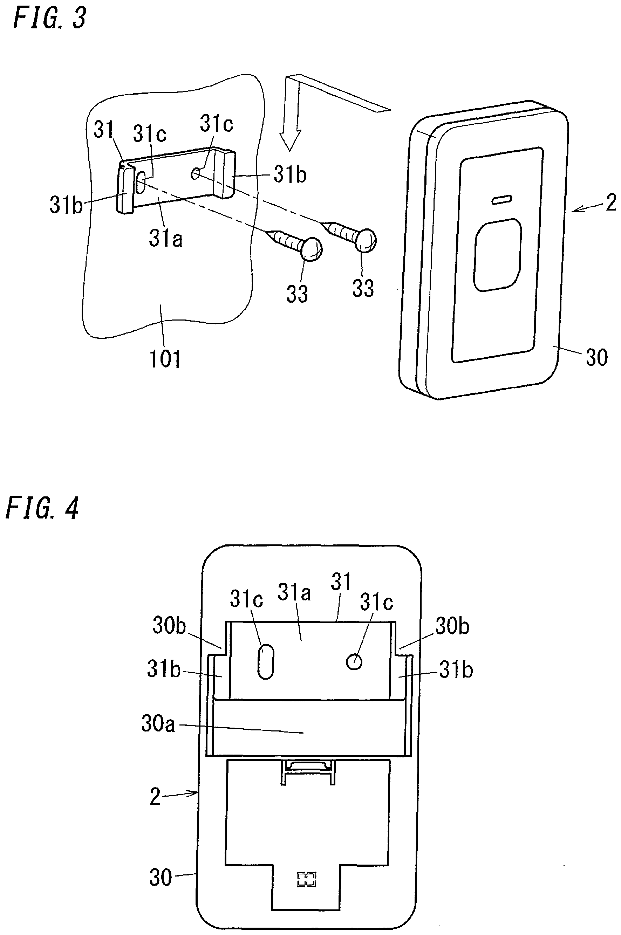

**FIG. 3** is an explanatory view illustrating how to attach the wall-mounted type audio announcement terminal used in the residential security system.
**FIG. 4** is a rear view illustrating the audio announcement terminal.

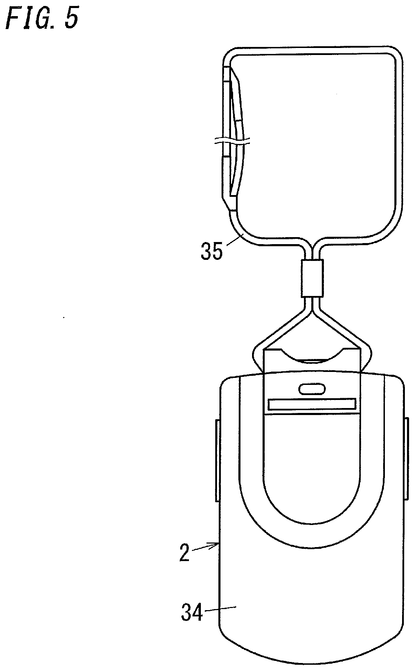

**FIG. 5** is a front view illustrating the pendant type audio announcement terminal used in the residential security system.

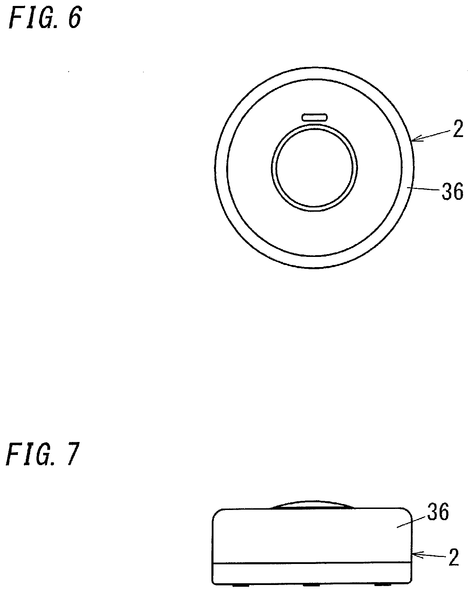

**FIG. 6** is a top view illustrating the stationary type audio announcement terminal used in the residential security system.
**FIG. 7** is a front view illustrating the stationary type audio announcement terminal.

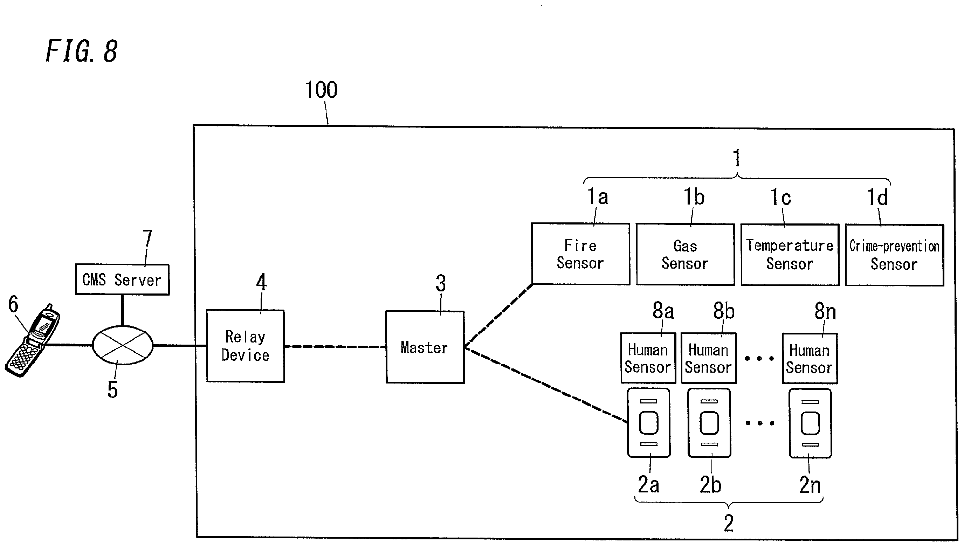

**FIG. 8** is a block diagram illustrating the first modification of the audio announcement terminal used in the residential security system.

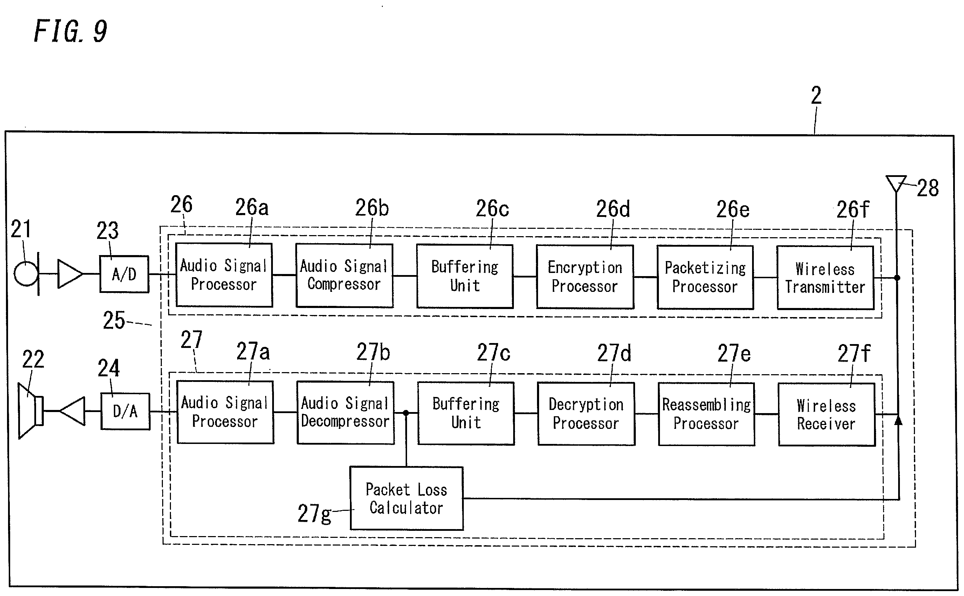

**FIG. 9** is a block diagram illustrating the second modification of the audio announcement terminal used in the residential security system.

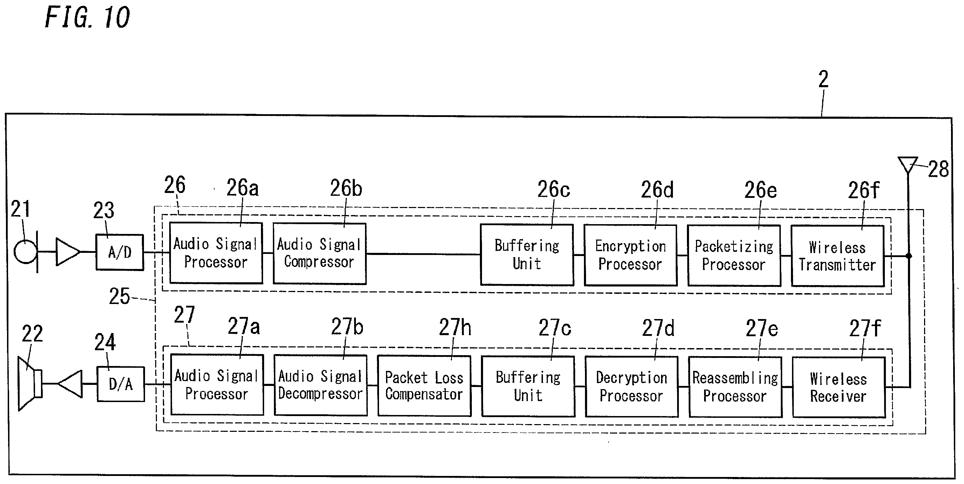

**FIG. 10** is a block diagram illustrating the third modification of the audio announcement terminal used in the residential security system.

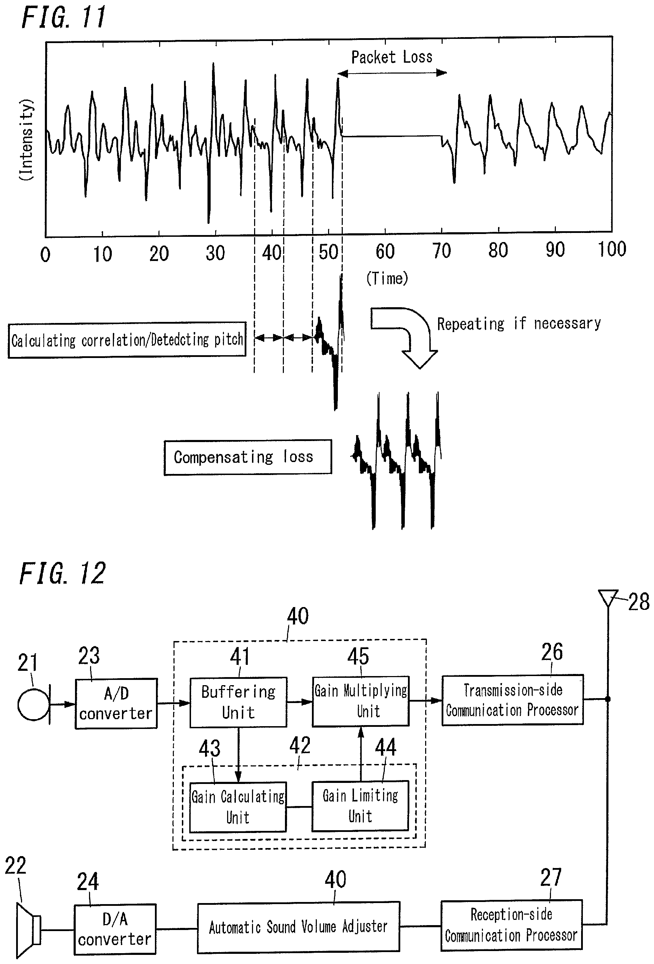

**FIG. 11** is a wave chart illustrating an audio signal for giving explanations to the compensation process of packet loss of the residential security system.
**FIG. 12** is a block diagram illustrating the primary part of the fourth modification of the audio announcement terminal used in the residential security system.

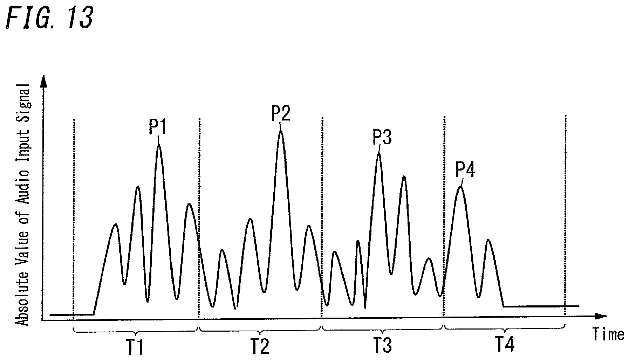

**FIG. 13** is an explanatory diagram illustrating a method in which the audio announcement terminal used in the residential security system calculates the representative value from the audio input signal.

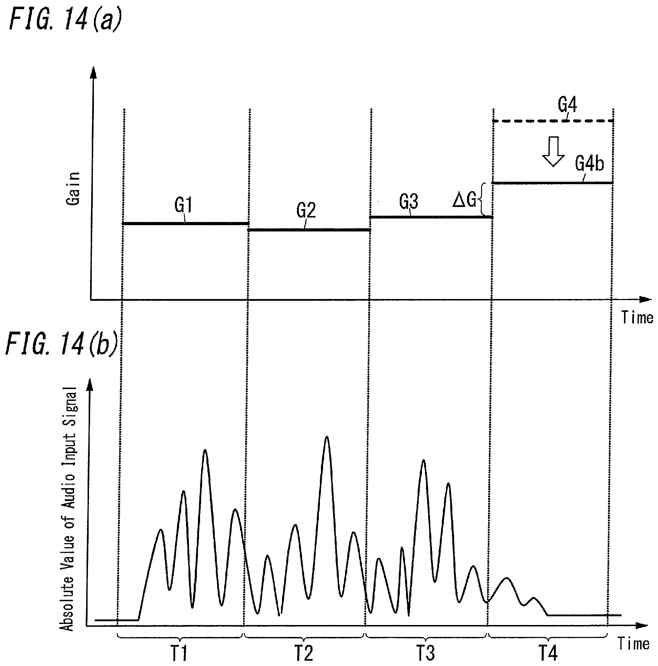

**FIGS. 14(a)** and **14(b)** are diagrams for illustrating the automatic sound volume adjusting process of the audio announcement terminal used in the residential security system, and **FIG. 14**(a) particularly shows the gain and **FIG. 14**(b) particularly shows the absolute value of the audio input signal.

### Description of Embodiments

The residential security system according to the present invention serves as system for detecting an abnormality considered to be destructive to security of a residence and warning residents inside a residence and giving announcements to a predetermined outside addressee. One embodiment of such a residential security system is described with reference to the drawings.

**FIG. 1** is a schematic diagram illustrating a configuration of the residential security system of one embodiment according to the present invention. This residential security system includes sensor terminals **1** installed in a residence **100,** audio announcement terminals **2 (2a, 2b, ..., 2n),** a master **3,** and a relay device **4,** as primary components. In other words, the residential security system of the present embodiment includes at least one sensor terminal **1,** at least one audio announcement terminal **2,** and a master **3** which are installed in the same residence. Further, the residential security system of the present embodiment includes a relay device **4** configured to allow communication between a public telecommunication network 5 to which a mobile phone **6** is to be connected, and the master **3.**

The sensor terminal **1** is configured to provide information (detection information) for judging occurrence of an abnormality regarding the residence, to the master **3.** The sensor terminal **1** is configured to detect the abnormality. The sensor terminal 1 is configured to, when detecting occurrence of the abnormality, output an announcement signal to the master **3** as the information (detection information).

For example, the sensor terminal **1** detects an abnormality considered to be destructive to security of the residence **100.** The sensor terminal 1 includes a communication module according to low power radio communication (e.g., 400 MHz-band in Japan, and 868 MHz-band in Europe). The sensor terminal **1** detects occurrence of an abnormality and then sends a signal for announcing occurrence of the abnormality to the master **3** through wireless communication.

In the present embodiment, the sensor terminal **1** may be selected from a fire sensor **1a** for sensing a fire, a gas sensor **1b** for detecting flammable gas such as methane or incomplete combustion gas such as carbon monoxide, a temperature sensor **1c,** and a crime-prevention sensor **1d** for detecting intrusion into the residence **100.**

Various types of crime-prevention sensors **1d** are available. For example, the crime-prevention sensor **1d** may be an opening/closing sensor for detection of opening and closing of entrances or glass windows, a destruction detection sensor for detecting destruction of glass windows, a pyroelectric human sensor for detecting infrared rays emitted from a human body, and a sensor camera for detecting intrusion based on results of processing of images taken by a crime-prevention camera.

Note that, types and/or the number of sensor terminals 1 can be appropriately selected as needed.

The audio announcement terminal **2 (2a, 2b, ..., 2n)** includes a microphone **21** and a speaker 22, and is installed in the residence **100.** The audio announcement terminal **2 (2a, 2b, ..., 2n)** is used for collecting surrounding sounds by the microphone **21** in response to detection of occurrence of the abnormality by the sensor terminal 1, and then sending them to a predetermined addressee by way of the master **3.**

The audio announcement terminal **2** has two communication modes which are a reception mode of outputting, from the speaker **22,** an audio signal received from the master **3,** and a transmission mode of sending an audio signal generated by the microphone **21** to the master **3.** The audio announcement terminal **2** is configured to select one of the communication modes in accordance with a control signal from the master **3.**

The audio announcement terminals **2a, 2b, ..., 2n** are installed in rooms of the residence **100,** for example. The number of audio announcement terminals **2a, 2b,** ..., **2n** may be changed if necessary.

Note that, in the following, when giving explanations to a specific one of the audio announcement terminals, the specific one of audio announcement terminals is designated by use of a unique reference sign **2a, 2b, ..., 2n,** and when giving explanations common to all the audio announcement terminals, the audio announcement terminal is designated by use of a common reference sign 2.

The master **3** is installed inside the residence **100,** and performs wireless communication with the sensor terminal **1** and the audio announcement terminal **2.**

When the master **3** determines that the abnormality has occurred, based on the information (detection information) from the sensor terminal **1,** the master **3** performs a process (path forming process) of forming an audio communication path to the audio announcement terminal **2** and the mobile phone **6** which is preliminarily registered. The audio communication path is a path for sending audio signals to and receiving audio signals from the audio announcement terminal 2 and the mobile phone **6.**

Note that, when detecting the abnormality, the sensor terminal 1 outputs an announcement signal to the master **3** as the detection information. Therefore, when receiving the announcement signal from the sensor terminal **1,** the master **3** determines that the abnormality has occurred.

In the path forming process, the master **3** sends an e-mail indicative of occurrence of the abnormality to the mobile phone **6** preliminarily registered, and sends a control signal (first control signal) for switching the audio announcement terminal **2** to the transmission mode to the audio announcement terminal **2.** Thereby, the mobile phone **6** receives the e-mail indicative of occurrence of the abnormality. Further, the audio announcement terminal **2** is switched to the transmission mode, and is allowed to send an audio signal to the master **3.** Thereafter, when receiving a command (reception command) corresponding to a reception operation at the mobile phone **6,** the master 3 sends an audio signal sent from the audio announcement terminal 2 in the transmission mode to the mobile phone **6.** Thereby, the mobile phone **6** outputs the audio signal sent from the audio announcement terminal **2** in the transmission mode. According to the above process, the master **3** forms the audio communication path to the audio announcement terminal **2** and the mobile phone **6.**

When receiving a command (switching command) corresponding to a switching operation at the mobile phone **6** after receiving a command (reception command) corresponding to a reception operation at the mobile phone **6,** the master sends a control signal (second control signal) for switching the audio announcement terminal **2** to the reception mode to the audio announcement terminal **2.** Thereby, the audio announcement terminal **2** is switched to the reception mode. When the audio announcement terminal **2** is switched to the reception mode, the master **3** sends an announcement signal to the mobile phone **6.** Thereafter, when receiving the audio signal from the mobile phone **6,** the master **3** sends the audio signal received from the mobile phone **6** to the audio announcement terminal **2** in the reception mode. Thus, the audio announcement terminal **2** in the reception mode outputs the audio signal sent from the mobile phone **6.** According to the above process, the master **3** forms the audio communication path to the audio announcement terminal **2** and the mobile phone **6.**

Note that, when subsequently receiving a command (switching command) corresponding to the switching operation at the mobile phone 6, the master sends the control signal (first control signal) for switching the audio announcement terminal **2** to the transmission mode to the audio announcement terminal **2.** Thereby, the audio signal from the audio announcement terminal **2** is sent to the mobile phone **6.** Further, the mobile phone **6** outputs the audio signal sent from the audio announcement terminal **2** in the transmission mode.

The relay device **4** allows communication between the public telecommunication network and the master **3.** The public telecommunication network is, for example, a WAN (Wide Area Network) **5** according to Ethernet (registered trademark) or GPRS (General Packet Radio Service).

Note that, the master **3** may be configured to have a gateway function (function of the relay device **4**) so as to double as the relay device **4.** In this case, there is no need to provide the master **3** and the relay device **4** as separate devices, and therefore the production cost can be reduced.

As shown in **FIG. 2****,** the audio announcement terminal **2** includes the speaker **22** and the microphone **21.** The audio announcement terminal **2** has the two communication modes which are the reception mode of outputting an audio signal received from the master **3** from the speaker **22** and the transmission mode of sending an audio signal generated by the microphone **21** to the master **3.** The audio announcement terminal **2** is configured to select one of the communication modes in accordance with a control signal from the master **3.**

Thereafter, the configuration of the audio announcement terminal **2** is described in detail with reference to the block diagram shown in **FIG. 2****.**

The audio announcement terminal **2** includes the microphone **21,** the speaker **22,** an A/D converter (A/D conversion circuit) **23,** a D/A converter (D/A conversion circuit) **24,** a wireless communication processor (wireless communication processing circuit) **25** (constituted by a transmission-side communication processor [transmission-side communication processing circuit] **26** and a reception-side communication processor [reception-side communication processing circuit] **27**), and an antenna **28.**

In the transmission mode, when a sound is inputted into the microphone **21,** the sound is converted into an audio signal as an electric signal by the microphone **21** and then the resultant audio signal is converted into a digital signal by the A/D converter **23,** and thereafter the resultant digital signal is outputted to the transmission-side communication processor **26,** and then sent as a wireless signal via the antenna **28.** In contrast, in the reception mode, a wireless signal received via the antenna **28** is converted into an audio signal by the reception-side communication processor **27,** and the resultant audio signal is converted into an analog signal by the D/A converter **24,** and then is outputted from the speaker **22** as a sound.

The transmission-side communication processor **26** includes an audio signal processor (audio signal processing circuit) **26a,** an audio signal compressor (compression circuit) **26b,** a buffering unit (buffering circuit) **26c,** an encryption processor (encryption processing circuit) **26d,** a packetizing processor (packetizing processing circuit) **26e,** and a wireless transmitter (wireless transmission circuit) **26f.**

The audio signal processor **26a** performs a process such as automatic sound volume adjustment of adjusting a sound volume level of an audio signal inputted from A/D converter **23.** The audio signal compressor **26b** compresses an audio signal inputted from the audio signal processor **26a,** and then stores it in the transmission side buffering unit **26c.** The audio signal stored in the buffering unit **26c** is encrypted by the encryption processor **26d** in accordance with a predetermined encryption rule, and then the encrypted audio signal is packetized (divided) by the packetizing processor **26e** to generate audio packets. The audio packets generated by the packetizing processor **26e** are inputted into the wireless transmitter **26f** and are sent from the wireless transmitter **26f** through the antenna **28** as wireless signals.

The reception-side communication processor **27** includes an audio signal processor **27a,** an audio signal decompressor (decompression circuit) **27b,** a buffering unit **27c,** a decryption processor (decryption processing circuit) **27d,** a reassembling processor (reassembling processing circuit) **27e,** and a wireless receiver (wireless reception circuit) **27f.**

When the wireless receiver **27f** receives wireless signals through the antenna **28,** the received wireless signals (audio packets) are reassembled (reconstructed) by the reassembling processor **27e.** The audio signal obtained by the audio packets is decrypted by the decryption processor **27d,** and then stored in the buffering unit **27c.** The audio signal stored in the buffering unit **27c** is read out by the audio signal decompressor **27b** and is subjected to data decompression processing and thereafter further subjected to some processing such as the automatic sound volume adjustment and packet loss complement by the audio signal processor **27a.** Further, the audio signal outputted from the audio signal processor **27a** is converted into an analog signal by the D/A converter **24,** and further outputted from the speaker **22** as a sound.

In this regard, the audio signal compressor **26b** and the audio signal decompressor **27b** constitute a compression and decompression unit (compression and decompression circuit). The encryption processor **26d** and the decryption processor **27d** constitute an encryption and decryption processing unit (encryption and decryption processing circuit). The packetizing processor **26e** and the reassembling processor **27e** constitute a packet processing unit (packet processing circuit). The wireless transmitter **26f** and the wireless receiver **27f** constitute a wireless transceiver unit. Further, the compression and decompression unit (the audio signal compressor **26b** and the audio signal decompressor **27b**), the encryption and decryption processing unit (the encryption processor **26d** and the decryption processor **27d**), and the packet processing unit (the packetizing processor **26e** and the reassembling processor **27e**) are realized by performing embedded programs by a computer (e.g., a microcomputer).

As described above, the audio announcement terminal **2** includes the wireless communication processor **25** configured to send to and receive from the master **3** the audio signal via wireless packet communications. The wireless communication processor **25** includes the compression and decompression unit (the audio signal compressor **26b** and the audio signal decompressor **27b**), the encryption and decryption processing unit (the encryption processor **26d** and the decryption processor **27d**), the packet processing unit (the packetizing processor **26e** and the reassembling processor **27e**), and the wireless transceiver unit (the wireless transmitter **26f** and the wireless receiver **27f**).

The wireless communication processor **25** is configured to, when receiving a packet of the audio signal by the wireless transceiver unit, obtain the audio signal from the packet by the packet processing unit, and decrypt the audio signal by the encryption and decryption processing unit, and decompress the decrypted audio signal by the compression and decompression unit, and output the decompressed and decrypted audio signal from the speaker **22.**

The wireless communication processor **25** is configured to, when the audio signal is produced by the microphone **21,** compress the audio signal by the compression and decompression unit, and encrypt the compressed audio signal by the encryption and decryption processing unit, and packetize the encrypted and compressed audio signal by the packet processing unit, and send the packet of the encrypted and compressed audio signal by the wireless transceiver unit.

The audio announcement terminal **2** may be a wall-mounted device as shown in **FIG. 3** and **FIG. 4****,** a pendant device as shown in **FIG. 5****,** or a stationary device as shown in **FIG. 6** and **FIG. 7****.**

The audio announcement terminal **2** shown in **FIG. 3** and **FIG. 4** is a wall-mounted device including an engagement part **30b** to be engaged with a fixing **31** fixed to a wall **101.** As shown in **FIG. 3** and **FIG. 4****,** the wall-mounted audio announcement terminal **2** includes a housing **30** and the fixing **31.** The housing **30** has a small box shape and has a thickness less than dimensions in an upward and downward direction and a left and right direction. The fixing **31** is used for attaching the housing **30** to the wall **101.**

The circuit described with reference to the block diagram of **FIG. 2** is housed in the housing **30.**

The fixing **31** includes an attachment piece **31a** and a pair of hooking pieces **31b.** The attachment piece **31a** has a rectangular plate shape and is to be attached to the wall **101**. The pair of hooking pieces **31b** extend in the same direction (direction substantially perpendicular to the attachment piece **31a**) from opposite ends of the attachment piece **31a** in a lengthwise direction of the attachment piece **31a.** Front ends of the pair of hooking pieces **31b** are bent in opposite directions, and each hooking piece **31b** has an almost L-shape in a side view. The attachment piece **31a** includes through holes **31c** for insertion of screws **33.** The attachment piece **31a is** fixed to the wall **101** by screwing the screws **33** passing through the through holes **31c** into the wall **101.** The housing **30** has a rear surface including a recess **30a** to receive the hooking pieces **31b** of the fixing **31.**

The housing **30** is placed in front of the fixing **31** fixed to the wall **101,** and the hooking pieces **31b** are inserted into the recess **30a.** Thereafter, the housing **30** is moved downward. By doing so, the engagement parts **30b** provided both left and right sides of the upper end of the recess **30a** are engaged with upper parts of the hooking pieces **31b,** and thereby the housing **30** is attached to the wall **101** by way of the fixing **31.** Note that, the housing **30** may be detached from the wall **101** by moving the housing **30** upward until engagement between the hooking pieces 31b and the engagement parts **30b** is canceled.

In a case where the audio announcement terminal **2** is a wall-mounted device, the audio announcement terminal **2** can be used while attached to the wall.

The audio announcement terminal **2** shown in **FIG. 5** is a pendant device including cord **35** for hanging. The pendant audio announcement terminal **2** includes a housing **34.** As shown in **FIG. 5****,** the housing **34** has a small box shape and has a thickness less than dimensions in an upward and downward direction and a left and right direction.

The circuit described with reference to the block diagram of **FIG. 2** is housed in the housing **34.**

The cord **35** for hanging is attached to an upper side of the housing **34.** By hanging the cord **35** on a neck, the housing **34** can be hung on the neck. As described above, in a case where the audio announcement terminal **2** is a pendant device, the audio announcement terminal **2** can be used while hung on a neck.

The audio announcement terminal **2** shown in **FIG. 6** and **FIG. 7** is a stationary device to be placed on a support. The stationary audio announcement terminal **2** includes a housing **36.** As shown in **FIG. 6** and **FIG. 7****,** the housing **36** has a hollow cylinder and has a height less than a diameter.

The circuit described with reference to the block diagram of **FIG. 2** is housed in the housing **36.** The audio announcement terminal **2** can be used while the housing **36** is placed on the support such as a table and a desk, for example. As described above, in a case where the audio announcement terminal **2** is a stationary device, the audio announcement terminal **2** can be used while situated on a desired place.

Note that, the shape of the audio announcement terminal **2** is not limited to the aforementioned shape, but may be changed appropriately.

Hereinafter, an operation in a case where any of the sensor terminals **1** detects the abnormality is described.

When any of the sensor terminals **1** has detected occurrence of the abnormality, the sensor terminal **1** informs surrounding persons of occurrence of the abnormality by outputting a warning sound, and sends the announcement signal for announcing occurrence of the abnormality to the master **3** through wireless communication, for example.

When receiving the announcement signal for announcing occurrence of the abnormality from the sensor terminal **1,** the master **3** accesses a CMS server **7** by way of the relay device **4** and the WAN **5,** and sends, to the CMS server **7,** a control command for sending an e-mail for announcing occurrence of the abnormality to the preliminarily registered mobile phone **6.** Further, the master **3** sends the control signal for switching the audio announcement terminal **2** to the transmission mode, to the audio announcement terminal **2,** through wireless communication, and thereby the master **3** forcibly switches the audio announcement terminal **2** to the transmission mode.

When the CMS server **7** receives this control command, the CMS server **7** sends the e-mail for announcing occurrence of the abnormality by setting a mail address of the preliminarily registered mobile phone **6** as a destination address of the e-mail. As described above, in the present embodiment, the master **3** sends the e-mail to the preliminarily registered mobile phone **6** by use of the CMS server **7.**

The e-mail sent from the CMS server **7** to the mobile phone **6** is stored in a mail box of a mail server operated by a mobile phone company, and the mail server sends a reception notice to the mobile phone **6.** When a user of the mobile phone **6** notices the reception notice of the e-mail and performs a reception operation of the e-mail, the mobile phone **6** accesses the mail server, and downloads the e-mail sent from the CMS server **7.** As a result, the user of the mobile phone **6** can check the e-mail sent from the CMS server **7,** and know the abnormality has occurred inside the residence 100.

In this regard, when the user of the mobile phone **6** would like to know detailed situations inside the residence **100,** the user accesses a web page of the CMS server **7** by controlling the mobile phone **6.**

This web page shows a reception button for receiving sounds collected by the audio announcement terminal **2** of the residence **100** associated with the mobile phone **6** which has accessed the web page.

When the user of the mobile phone **6** performs an operation of selecting the reception button, the control command (reception command) corresponding to the operation is sent from the mobile phone **6** to the CMS server **7.** When receiving this control command, the CMS server **7** accesses the master **3** by way of the WAN **5** and the relay device **4,** and sends the control signal for sending the audio signal sent from the audio announcement terminal **2** in the transmission mode to the master **3.**

The master **3** starts to an operation of sending the audio signal in response to the control signal sent from the CMS server **7,** and thereby sends the packetized audio signal sent from the audio announcement terminal **2** to the CMS server **7** by way of the relay device **4** and the WAN **5.**

When receiving the packetized audio signal from the master **3,** the CMS server **7** transfers it to the mobile phone **6** as a requestor, through the WAN **5.** Therefore, it is possible to listen to the sounds collected by the audio announcement terminal 2 by use of the mobile phone **6.**

In the present embodiment, a plurality of the audio announcement terminals **2** are installed in the residence **100.** In this case, the master **3** may select in turn one from the plurality of audio announcement terminals **2** as the audio announcement terminal in the transmission mode, each time predetermined time elapses.

For example, the master **3** is configured to, in a process of sending, to the mobile phone **6,** the audio signal sent from an audio announcement terminal **2** in the transmission mode, select in turn one from the plurality of audio announcement terminals **2** as the audio announcement terminal **2** in the transmission mode, each time predetermined time elapses.

As described above, when the reception button is selected at the mobile phone **6** in a case where the sensor terminal **1** has detected the abnormality, the master **3** sends the audio signal sent from the audio announcement terminal **2** to the mobile phone **6.** When the audio announcement terminal **2** sending the audio signals are switched in turn each time predetermined time elapses, it is possible to listen to the sounds collected by the multiple audio announcement terminals **2** installed in the residence **100** by use of the mobile phone **6.** Therefore, it is possible to know situations inside the residence **100** in more detail.

Note that, in the aforementioned operation, it is possible to hear sounds collected by the audio announcement terminal **2** in the residence **100** by use of the external mobile phone **6.** In contrast, sounds received by the mobile phone **6** can be outputted from the audio announcement terminal **2.**

When the user of the mobile phone **6** intends to talk to someone in the residence **100** by way of the audio announcement terminal **2,** the user operates the mobile phone **6** to access the web page of the CMS server **7.** This web page shows a switching button for switching the communication mode of the audio signal of the audio announcement terminal **2** of the residence **100** associated with the mobile phone **6** which has accessed this web page.

The user of the mobile phone **6** performs an operation of selecting the switching button, and then the mobile phone **6** sends a control command (switching command) corresponding to this operation to the CMS server **7.** When receiving this control command, the CMS server **7** accesses the master **3** through the WAN **5** and the relay device **4,** and sends a control signal for switching the communication mode of the audio signal of the audio announcement terminal **2** to the master **3.**

In response to the control signal sent from the CMS server **7,** the master **3** sends a control signal (second control signal) for switching the audio announcement terminal **2** to the reception mode, to the audio announcement terminal **2.**

The audio announcement terminal **2** switches the communication mode from the transmission mode to the reception mode in response to the control signal (second control signal) from the master **3.** When the master **3** confirms that the audio announcement terminal **2** has been switched to the reception mode, the master **3** sends a signal indicative of completion of reception preparation of the CMS server **7.**

When receiving this signal, the CMS server **7** displays indication of the completion of the reception preparation of the audio announcement terminal **2** on the web page, and further displays a transmission button for starting transmission on the web page. When watching the indication of the completion of the reception preparation, the user of the mobile phone **6** performs an operation of selecting the transmission button by manually operating the mobile phone **6.**

By doing so, a command corresponding to this operation is sent from the mobile phone **6** to the CMS server **7,** and therefore the CMS server **7** performs a process of transferring audio data sent from the mobile phone **6** to the master **3.** In other words, when the user of the mobile phone **6** speaks to the microphone of the mobile phone **6,** sound received by the microphone is sent from the mobile phone **6** to the CMS server **7.**

When receiving the audio signal from the mobile phone **6** through the WAN **5,** the CMS server **7** sends the received audio signal to the master **3** by way of the WAN **5** and the relay device **4.** The master **3** sends the received audio signal to the audio announcement terminal **2** and thereby causes the audio announcement terminal **2** to output the audio signal from the speaker **22.**

Throughout the aforementioned process, the sound inputted into the mobile phone **6** by the user of the mobile phone **6** is outputted from the audio announcement terminal **2** in the residence **100,** and therefore the user can communicate with a resident inside the residence **100.**

In a case where a plurality of audio announcement terminals **2** are installed in the residence **100** as with the present embodiment, the system may be configured to allow the user of the mobile phone **6** to select the audio announcement terminal **2** for outputting the sound from the mobile phone **6.**

For example, the master **3** is configured to, when receiving a selection command corresponding to a selection operation of the audio announcement terminal **2** at the mobile phone **6** after receiving the command (switching command) corresponding to the switching operation at the mobile phone **6,** send a control signal (second control signal) for switching the audio announcement terminal **2** to the reception mode to the audio announcement terminal **2** designated by the received selection command.

For example, the CMS server **7** preliminarily collects information such as IDs and locations of a plurality of audio announcement terminals **2** installed in a residence **100** from the master **3** of each residence **100,** and stores the collected information associated with ID information of each master **3.**

As describe above, when the user of the mobile phone **6** operates the mobile phone **6** to access the web page of the CMS server **7,** the CMS server **7** reads out the information of the plurality of audio announcement terminals **2** stored in associated with the ID information of the corresponding master **3,** and displays selection buttons for selecting any of the plurality of audio announcement terminals **2** on the web page.

When the user of the mobile phone **6** selects the selection button corresponding to the desired audio announcement terminal **2,** the mobile phone **6** sends the selection command corresponding to the selection operation to the CMS server **7,** and the CMS server **7** transfers the selection command sent from the mobile phone **6** to the master **3.**

When receiving this selection command, the master **3** switches only the audio announcement terminal **2** designated by the selection command to the reception mode, and outputs the audio signal sent from the mobile phone **6** to this audio announcement terminal **2** and thereby causes this audio announcement terminal **2** to output the sent audio signal from the speaker **22.**

As described above, the audio announcement terminal **2** for outputting the sound received by the mobile phone **6** can be selected from the plurality of audio announcement terminals **2a** to **2n.** Therefore, it is possible to output the sound from the desired audio announcement terminal **2.**

In a case where the audio announcement terminal 2 are switched to the transmission mode in turn each time the predetermined time elapses as described above, the user of the mobile phone **6** can hear sounds collected by the plurality of audio announcement terminals **2** in turn. Hence, based on the results, the user can identify the audio announcement terminal **2** which a resident is considered to be close to.

Note that, the master **3** may send the audio signal from the audio announcement terminal **2** together with the ID of this audio announcement terminal **2,** and the mobile phone **6** may output the sounds from the audio announcement terminal **2** and display the received ID on the display at the same time. In this case, the user of the mobile phone **6** can identify which of the audio announcement terminals **2** the sound which the user hears currently comes from.

When the audio announcement terminal **2** which a resident is considered to be close to is found, the user of the mobile phone **6** operates the mobile phone **6** to access the web page of the CMS server **7,** and selects the audio announcement terminal **2** which a resident is considered to be close to. Consequently, it is possible to output sounds inputted into the mobile phone **6** from the speaker **22** of the audio announcement terminal **2** which a resident is considered to be close to. Therefore, a resident inside the residence **100** can successfully hear the sounds inputted into the mobile phone **6.**

Further, in a case where a plurality of audio announcement terminals **2** are installed in the residence **100** as with the present embodiment, the system may be configured to allow the plurality of the audio announcement terminals **2** to output the sound from the mobile phone **6** simultaneously.

For example, the master **3** is configured to, in a process of sending a control signal (second control signal) for switching the audio announcement terminal **2** to the reception mode to the audio announcement terminal **2,** send the control signal (second control signal) for switching the audio announcement terminal **2** to the reception mode to each of the plurality of audio announcement terminals **2.** The master **3** is configured to, in a process of sending the audio signal received from the mobile phone **6** to the audio announcement terminal **2,** send the audio signal received from the mobile phone **6** to each of the plurality of audio announcement terminals **2.**

In other words, when the audio signal from the mobile phone 6 inputted into the master **3** by way of the CMS server **7,** the master **3** controls the plurality of audio announcement terminals **2** to the reception mode, and outputs the audio signal inputted from the CMS server **7** to the plurality of audio announcement terminals **2,** and thereby causes the plurality of audio announcement terminals **2** to simultaneously output the sound inputted into the mobile phone **6.**

Thereby, the plurality of the audio announcement terminals **2** installed in the residence **100** output simultaneously the sound inputted into the mobile phone **6** by the user of the mobile phone **6.** Therefore, even when it is unknown where a resident is present inside the residence **100,** the person in the residence **100** can be made to successfully hear the sound from the mobile phone **6.**

Further, in a case where a plurality of audio announcement terminals **2** are installed in the residence **100** as with the present embodiment, a plurality of human sensors **8a, 8b, ..., 8n** configured to detect persons present in vicinities of locations of the plurality of audio announcement terminals **2a, 2b, ..., 2n** respectively may be installed as shown in **FIG. 8****.** Note that, in the following explanation, when referring to the human sensor without identifying a particular one of the human sensors, the human sensor is represented as the human sensor **8.**

For example, the residential security system includes the plurality of audio announcement terminals **2;** and the plurality of human sensors **8** individually associated with the plurality of audio announcement terminals **2.** Each of the plurality of human sensors **8** is configured to detect a person present around a location of an associated one of the plurality of audio announcement terminals **2.** The master **3** is configured to judge, based on each detection result from the plurality of human sensors **8,** whether a person is present around each location. The master **3** is configured to, in a process of sending a control signal (first control signal) for switching the audio announcement terminal **2** to the transmission mode to the audio announcement terminal **2,** send the control signal (first control signal) for switching the audio announcement terminal **2,** to an audio announcement terminal **2** at a location which a person is judged to be present around.

The human sensor **8** is a pyroelectric infrared detector, for example. The human sensor **8** detects a person based on detection of an infrared ray emitted from a human body. Further, the human sensor **8** includes a wireless communication module according to low power radio communication. When detecting a person, the human sensor **8** sends a detection signal together with an ID allocated to the human sensor **8** to the master **3.**

The master **3** stores a combination of the audio announcement terminal **2a, 2b, ..., 2n** and the human sensor **8a, 8b, ..., 8n** which are placed adjacent to each other. When receiving the detection signal and the ID from the human sensor **8** which has detected a person, the master **3** infers that a person is present around the audio announcement terminal **2** associated with the human sensor **8** as a sender.

When any of the sensor terminals **1** detects the abnormality and the announcement signal for announcing occurrence of the abnormality is inputted into the master **3,** the master **3** switches the audio announcement terminal **2** to the transmission mode. In this process, based on the detection results of the human sensors **8,** the master **3** switches only the audio announcement terminal **2** at a location which a person is judged to be present around, to the transmission mode.

In a case where the user of the mobile phone **6** performs the reception operation and thereby the master **3** sends the audio signal from the audio announcement terminal **2** to the mobile phone **6,** the master **3** sends only the audio signal of the audio announcement terminal **2** which is switched to the transmission mode based on the detection results of the human sensors **8a** to **8n,** to the mobile phone **6.**

Consequently, the master **3** forms a sound communication path between the audio announcement terminal **2** around which a person is judged to be present based on the detection results of the human sensors **8a** to **8n** and the mobile phone **6** designated as an addressee. Hence, the probability that the user of the mobile phone **6** can hear voice of a person present inside the residence **100** can be increased, and it is possible to know the situation inside the residence **100** in more detail.

Note that, when persons are judged to be present around a plurality of audio announcement terminals **2** based on the detection results of the human sensors **8a** to **8n,** sounds collected by the plurality of audio announcement terminals **2** around which persons are judged to be present may be switched and outputted to the mobile phone **6** in turn each time predetermined time elapses.

For example, the master **3** is configured to, when there are two or more audio announcement terminals **2** each at a location which a person is judged to be present around, in a process of sending a control signal (first control signal) for switching the audio announcement terminals **2** to the transmission mode to the audio announcement terminals **2,** send the control signal (first control signal) for switching the audio announcement terminals **2** to the transmission mode, to each of the two or more audio announcement terminals **2** each at a location which a person is judged to be present around. The master **3** is configured to, in a process of sending, to the mobile phone **6,** the audio signal sent from an audio announcement terminal **2** in the transmission mode, select in turn one from the two or more audio announcement terminals **2** each at a location which a person is judged to be present around, as the audio announcement terminal **2** in the transmission mode, each time predetermined time elapses.

When any of the sensor terminals **1** detects the abnormality and the announcement signal for announcing occurrence of the abnormality is inputted into the master **3,** the master **3** switches the audio announcement terminal **2** to the transmission mode. In this process, based on the detection results of the human sensors **8a** to **8n,** the master **3** switches a plurality of audio announcement terminals **2** each at a location which a person is judged to be present around, to the transmission mode.

In a case where the user of the mobile phone **6** performs the reception operation and thereby the master **3** sends the audio signal from the audio announcement terminal **2** to the mobile phone **6,** the master **3** sends sequentially the audio signals of the plurality of audio announcement terminals **2** switched to the transmission mode based on the detection results of the human sensors **8a** to **8n,** to the mobile phone **6.**

As described above, the master **3** switches the audio announcement terminals **2** for outputting the audio signal to the mobile phone **6** sequentially each time the predetermined time elapses. Therefore, the sounds collected by the plurality of audio announcement terminals **2** are outputted in a predetermined order cyclically.

The sensor terminal **1** may be selected from various types of sensor terminals. When the fire sensor **1a** which is a heat sensor or a smoke sensor detects an abnormality and outputs the announcement signal to the master **3,** the master **3** preferably outputs a control signal for outputting a voice message of announcing occurrence of a fire to the audio announcement terminal **2.**

For example, the sensor terminal **1** is a fire alarm configured to provide a warring sound when sensing a fire. The master **3** is configured to, when receiving the announcement signal from the sensor terminal **1,** send a voice message for announcing occurrence of a fire to the audio announcement terminal **2.** The audio announcement terminal **2** is configured to, when receiving the voice message, output the voice message from the speaker **22.**

In this example, the audio announcement terminal **2** outputs the voice message for announcing occurrence of a fire in response to the control signal from the master **3.** Hence, it is possible to announce occurrence of a fire to a resident present who is not near the location of the fire sensor **1a** but is near to the audio announcement terminal **2,** and thereby prompt the resident to escape. In this regard, it is preferable that the voice message for announcing occurrence of a fire include a location of the alarming fire sensor **1a**. Thus, it is possible to inform a resident of a situation of occurrence of a fire in more detail.

Further, in a case of including the gas sensor **1b** configured to determine that an abnormality (pollution in air) has occurred when a gas concentration of intended gas (e.g., CO and CO₂) exceeds a predetermined threshold value, it is preferable that when the gas sensor **1b** detects the abnormality the audio announcement terminal **2** output a voice message for announcing the abnormality.

For example, the sensor terminal **1** is a gas sensor configured to sense gas. The master **3** is configured to, when receiving the announcement signal from the sensor terminal **1,** send a voice message to the audio announcement terminal **2.** The audio announcement terminal **2** is configured to, when receiving the voice message, output the voice message from the speaker **22.**

In this example, when the gas sensor **1b** detects the abnormality and outputs the announcement signal to the master **3,** the master **3** outputs the control signal of outputting the voice message for announcing that air has been polluted, to the audio announcement terminal **2.** The audio announcement terminal **2** outputs the voice message for announcing that air has been polluted, in response to the control signal from the master **3.** Hence, it is possible to announce pollution of air to a resident present who is not near the location of the gas sensor **1b** but is near to the audio announcement terminal **2,** and thereby prompt the resident to ventilate the residence.

Further, when the crime-prevention sensor **1d** configured to detect intrusion into the residence **100** detects an abnormality (occurrence of intrusion) and outputs the announcement signal to the master **3,** the master **3** preferably outputs a control signal for outputting a loud menacing sound to the audio announcement terminal **2.**

For example, the sensor terminal **1** is a crime-prevention sensor configured to detect an intruder into the residence **100.** The master **3** is configured to, when receiving the announcement signal from the sensor terminal **1,** send a control command for outputting a menacing sound to the audio announcement terminal **2.** The audio announcement terminal **2** is configured to, when receiving the control command, output the menacing sound from the speaker **22.**

In this example, the audio announcement terminal **2** outputs the loud menacing sound in response to the control signal from the master **3,** and thereby it is possible to warn an intruder.

Further, in a case where the sensor terminal **1** is constituted by a plurality of temperature sensors **1c** for measuring ambient temperatures, it is preferable that the audio announcement terminal **2** output sound in response to detection of the following abnormality.

For example, the residential security system includes a plurality of sensor terminals **1.** Each of the plurality of sensor terminals **1** is a temperature sensor configured to measure an ambient temperature. The information indicates the ambient temperatures measured by the plurality of sensor terminals **1.** The master **3** is configured to, when a difference between the ambient temperatures is greater than a predetermined threshold value and a maximum value or a minimum value of the ambient temperatures is out of a predetermined temperature range, determine that the abnormality has occurred, and send a control signal for outputting a warning sound to the audio announcement terminal **2.** The audio announcement terminal **2** is configured to, when receiving the control signal for outputting the warning sound, output the warning sound from the speaker **22.**

In this example, when determining that any of differences between the detection temperatures of the locations exceeds the predetermined threshold value and the maximum value or the minimum value of the detection temperatures is out of a predetermined temperature range, based on the detection temperatures of the plurality of temperature sensors **1c**, the master **3** considers that the air conditioner situated in a particular room is used excessively, and determines that the abnormality has occurred. When determining that the abnormality has occurred, the master **3** sends a control signal for outputting a warning sound for announcing excess use of air conditioners to the audio announcement terminal **2.** The audio announcement terminal **2** outputs the warning sound for announcing excess use of air conditioners in response to the control signal inputted from the master **3,** and thereby it is possible to prompt prevention of use of air conditioners (e.g., change of intended temperatures).

Further in the present embodiment, it is preferable that the audio announcement terminal **2** be configured to set either a file transfer scheme of accumulating the received audio signals until a total length of the received audio signals corresponds to prescribed time and then outputting the accumulated audio signals, or a streaming scheme, as a receiving processing scheme for the audio signal sent from the master **3.**

For example, the audio announcement terminal **2** switches a reception process of audio signals to either the file transfer scheme or the streaming scheme, based on the switching signal sent from the CMS server **7** or the master **3** together with the audio signal.

Note that, with regard to communications between the master **3** and the audio announcement terminal **2,** and between the master **3** and the CMS server **7** as well as the mobile phone **6,** audio signals are packetized and transmitted. The audio packet includes a header containing a sequence number. The sequence numbers are allocated to audio packets in order in a process of dividing (packetizing) an original audio signal. Hence, by connecting audio data of the audio packets (reception audio signals) in the order of the sequence number, the original audio signal can be restored.

In this regard, the reception process according to the file transfer scheme performed by the audio announcement terminal **2** is described. In the audio announcement terminal **2,** reassembling is performed by the reassembling processor **27e,** and decryption is performed by the decryption processor **27d** (encryption and decryption processing unit), and the resultant audio signals are inputted into corresponding regions of the buffering unit **27c** in accordance with the sequence numbers of the audio packets. When all the audio signals are stored in the buffering unit **27c,** the audio signal decompressor **27b** (compression and decompression unit) decompresses the audio signals read out from the buffering unit **27c** and outputs them from the speaker **22.**

In other words, the wireless communication processor **25** is configured to, in the file transfer scheme, accumulate the audio signals decrypted by the encryption and decryption processing unit (the decryption processor **27d**) in the buffering unit **27c,** and when the total length of the audio signals accumulated in the buffering unit **27c** corresponds to the prescribed time, read out the audio signals from the buffering unit **27c** and decompress the audio signals by the compression and decompression unit (audio signal decompressor **27b**), and output the decompressed audio signal from the speaker **22.**

As described above, the audio signals are decompressed after all the audio signals are stored in the buffering unit **27c.** Hence, when some audio packets are not received due to communication errors, it is possible to request the master **3** to resend an audio packet which has not been received. Therefore, all of the audio signals can be successfully received. Note that, a storage capacity of the buffering unit **27c** is set to a capacity capable of storing audio signals corresponding to predetermined time (e.g., **15** seconds).

Next, the reception process according to the streaming scheme performed by the audio announcement terminal **2** is described. In the streaming scheme, the buffering unit **27c** for reception is used as a ring buffer. Reassembling is performed by the reassembling processor **27e,** and decryption is performed by the decryption processor **27d** (encryption and decryption processing unit), and the resultant audio signals are inputted into corresponding regions of the buffering unit **27c** in accordance with the sequence numbers of the audio packets. A read pointer and a write pointer are set in the buffering unit **27c.** When a total amount of the audio signals corresponding to at least a maximum amount of jitter are stored in the buffering unit **27c,** the audio signal decompressor **27b** (compression and decompression unit) reads out the audio signals accumulated in the buffering unit **27c** in order from oldest (from a region designated by the read pointer) and performs a decompressing process.

In other words, the wireless communication processor **25** is configured to, in the streaming scheme, use the buffering unit **27c** as a ring buffer, and store the audio signal decrypted by the encryption and decryption processing unit (the decryption processor **27d**) in a predetermined region of the buffering unit **27c** based on a sequence number of a packet of the audio signal, and when a total amount of the audio signals corresponding to at least a maximum amount of jitter is accumulated in the buffering unit **27c,** read out the audio signals from the buffering unit **27c** in order from oldest, and decompress the audio signals by the compression and decompression unit (the audio signal decompressor **27b**), and output the decompressed audio signals from the speaker **22.**

As described above, when the total amount of the audio signals corresponding to at least the maximum amount of jitter is accumulated in the buffering unit **27c** used as a ring buffer, the audio signal decompressor **27b** reads out the audio signals from the buffering unit **27c** and performs the decompression process of the audio signals. Therefore, it is possible to perform audio transmission while a real-time performance is ensured and a decrease in audio quality caused by jitter is suppressed.

In the case of the audio transmission based on the streaming scheme, even when an audio packet is not received due to communication errors, a request of resending an audio packet which has not been received is not performed, and therefore the audio quality is likely to decrease. In view of this, as shown in **FIG. 9****,** it is preferable that a packet loss calculator **27g** configured to calculate a probability of occurrence of packet loss in a reception process according to the streaming scheme be provided between the buffering unit **27c** and the audio signal decompressor **27b** (compression and decompression unit) on a reception side and the probability of occurrence of packet loss calculated by the packet loss calculator **27g** be sent to the master **3** via wireless communication.

In other words, the packet loss calculator **27g** is configured to calculate a probability of occurrence of packet loss in a reception process according to the streaming scheme. The audio announcement terminal **2** is configured to send the probability of occurrence of packet loss calculated by the packet loss calculator **27g** to the master **3.**

In a process of transferring an audio signal from the buffering unit **27c** to the audio signal decompressor **27b,** when audio data having a corresponding sequence number is not stored, the packet loss calculator **27g** determines that packet loss has occurred. The packet loss calculator **27g** counts the number of times of packet loss per unit time, and sends the result of counting to the master **3** as the probability of occurrence of packet loss via wireless communication.

When receiving the probability of occurrence of packet loss from the audio announcement terminal **2,** the master **3** changes a length of the audio packet to decrease the probability of occurrence of packet loss (e.g., decrease the length of the audio packet with an increase in the probability of occurrence of packet loss) or changes a wireless channel to be used.

As described above, the packet loss calculator **27g** calculates the probability of occurrence of packet loss, and sends the result of the calculation to the master **3.** Therefore, the master **3** can take an action to decrease the probability of occurrence of packet loss. Hence, it is possible to improve the audio quality by reducing the packet loss.

Further, in the present embodiment, it is also preferable that the wireless communication processor **25** (in particular, the reception-side communication processor **27**) include a packet loss compensator **27h** as shown in **FIG. 10****.**

The packet loss compensator **27h** is configured to, when the wireless transceiver unit **25** fails to receive a packet of the audio signal, infer data of the audio signal contained in the packet which the wireless transceiver unit fails to receive, by use of data of the audio signal contained in the packet which the wireless transceiver unit **25** succeeds in receiving.

When packet loss occurs in the reception process of the audio packets, the packet loss compensator **27h** infers an audio signal contained in a missing audio packet by use of audio signals contained in audio packets which are not missed.

**FIG. 11** shows a wave chart of an audio signal for illustrating a basic principle of a process of inferring packet loss (hereinafter referred to as "inferring process"). In **FIG. 11****,** a vertical axis indicates an intensity of the received audio signal, and a lateral axis indicates time. When reception of an audio packet results in failure and packet loss (missing of the audio signal) occurs, the packet loss compensator **27h** extracts the audio signal with a length corresponding to preset time immediately before occurrence of the packet loss and sets the extracted audio signal as a base signal (template).

Next, this template is slid back to the past from a time point of occurrence of packet loss with regard to the reception audio signal, and correlation calculation between the template and the reception audio signal is performed, and thereby a basic period (pitch) of the reception audio signal immediately before occurrence of packet loss is calculated. Subsequently, the reception audio signal of one pitch from the occurrence of packet loss to the past is retrieved. The audio signal during a period in which packet loss has occurred is recovered by putting the retrieved reception audio signal repeatedly in a loss period.

For example, when a speaker produces a sound "A", the sound "A" is divided (packetized) by about 20 msec and transmitted by one audio packet. Therefore, in a period in which packet loss has occurred, a reception audio signal of one pitch immediately before occurrence of packet loss may be repeated at a high probability. It is considered that the original sound can be restored by putting the reception audio signal of one pitch in the period in which packet loss has occurred.

As described above, the packet loss compensator **27h** is provided, and therefore the audio packet which has not been received can be inferred. As a result, the audio quality can be improved.

Further, in the present embodiment, it is also preferable that the wireless communication processor **25** include the automatic sound volume adjuster **40** for adjusting each of amplitude levels of a transmission audio signal and a reception audio signal to be in a predetermined range.

The automatic sound volume adjuster **40** is configured to adjust each of an amplitude level of a reception audio signal which is the audio signal received from the master **3** and an amplitude level of a transmission audio signal which is the audio signal generated by the microphone **21,** to be in a predetermined range.

**FIG. 12** shows a block diagram of an example in which the automatic sound volume adjuster **40** is provided to each of the transmission-side communication processor **26** and the reception-side communication processor **27.** In the following, the automatic sound volume adjuster **40** provided to the transmission-side communication processor **26** is taken as an example for giving explanations to the configuration and operation of the automatic sound volume adjuster **40.**

The automatic sound volume adjuster **40** includes a buffering unit **41,** a gain setting unit **42** (constituted by a gain calculating unit **43** and a gain limiting unit **44**), and a gain multiplying unit **45,** as primary components. The automatic sound volume adjuster **40** adjusts a sound volume level of an audio input signal inputted from the A/D converter **23.** Note that, the gain setting unit **42** and the gain multiplying unit **45** can be implemented by a microcomputer executing embedded programs, for example.

The buffering unit **41** includes storage regions for storing the audio input signal with a length corresponding to predetermined time inputted from the A/D converter **23.** When there is no available storage region, the buffering unit **41** overwrites the storage region storing the oldest audio input signal to store a new audio input signal.

The gain setting unit **42** is constituted by the gain calculating unit **43** and the gain limiting unit **44,** and determines gain each time all the audio input signals stored in the buffering unit **41** are replaced by new ones (i.e., each time predetermined time elapses).

The gain calculating unit **43** calculates the gain based on a representative value of the audio input signals stored in the buffering unit **41** each time all the audio input signals stored in the buffering unit **41** are replaced by new ones. In a concrete example, based on the audio input signals for the predetermined time stored in the buffering unit **41,** the gain calculating unit **43** calculates a maximum value of absolute values of the audio input signals, and uses this maximum value as the representative value.

**FIG. 13** shows an example of a waveform of the audio input signal (absolute value). Each of periods **T1**, **T2, T3,** and T4 in **FIG. 13** corresponds to a total length of audio input signals which are allowed to be stored in the buffering unit **41.** In each of the periods **T1**, **T2, T3,** and **T4,** all the audio input signals stored in the buffering unit **41** are replaced with new ones.

The gain calculating unit **43** calculates the maximum values **P1**, **P2, P3,** and **P4** of the audio input signals stored in the buffering unit **41** at ends of the periods **T1, T2, T3,** and **T4,** and uses these maximum values **P1, P2, P3,** and **P4** as representative values of the audio input signals in corresponding periods, respectively.

The gain calculating unit **43** calculates the gain so that a value obtained by multiplying the maximum value (representative value) of the audio input signal by the gain is equal to a predetermined desired value, for each period. Note that, in each period, the representative value may be an average of the audio input signal.

When the gain is calculated by the gain calculating unit **43,** the gain limiting unit **44** calculates a difference between the previously calculated gain and the currently calculated gain by the gain calculating unit **43.**

When an absolute value of this difference is equal to or more than a predetermined first threshold value, the gain limiting unit **44** changes the previously calculated gain by a predetermined change limit **ΔG** to be close to the currently calculated gain to obtain a limitation value as a current gain, and outputs the current gain to the gain multiplying unit **45.**

In contrast, when the absolute value of the aforementioned difference is less than the predetermined first threshold value, the gain limiting unit **44** does not perform a process of limiting the gain, and outputs the gain currently calculated by the gain calculating unit **43** to the gain multiplying unit **45** without any modification.

Note that, the first threshold value is set to be a value greater than at least the change limit **ΔG.**

**FIG. 14(b)** shows an example of a waveform of the audio input signal, and **FIG. 14(a)** shows the gain calculated based on the audio input signal.

The gain calculating unit **43** calculates the gain each time all the audio input signals stored in the buffering unit **41** are replaced with new ones. **G1**, **G2, G3,** and **G4** represent gains calculated at ends of periods **T1**, **T2, T3,** and **T4,** respectively.

In this regard, when the gain is calculated by the gain calculating unit **43** at the end of the period **T2,** the gain limiting unit **44** calculates a difference between the previously calculated gain **G1** and the currently calculated gain **G2,** and compares the absolute value (|**G1-G2**|) of this difference with the first threshold value.

The absolute value of the difference between the gain **G1** and the gain **G2** is less than the first threshold value, and therefore the gain limiting unit **44** sets the currently calculated gain **G2** as the gain in the period **T2,** and outputs the gain **G2** to the gain multiplying unit **45.**

When the gain is calculated by the gain calculating unit **43** at the end of the period **T3,** the gain limiting unit **44** calculates a difference between the previously calculated gain **G2** (the gain in the period **T2**) and the currently calculated gain **G3,** and compares the absolute value of this difference with the first threshold value.

The absolute value of the difference between the gain **G2** and the gain **G3** is less than the first threshold value, and therefore the gain limiting unit **44** sets the currently calculated gain **G3** as the gain in the period **T3,** and outputs the gain **G3** to the gain multiplying unit **45.**

When the gain is calculated by the gain calculating unit 43 at the end of the period **T4,** the gain limiting unit **44** calculates a difference between the previously calculated gain **G3** (the gain in the period **T3**) and the currently calculated gain **G4,** and compares the absolute value of this difference with the first threshold value.

In this regard, the maximum value of the audio input signal in the period **T4** is drastically lower than the maximum value of the audio input signal in the period **T3.** Therefore, the gain **G4** becomes very large, and the absolute value of the difference between the gain **G3** and the gain **G4** is equal to or more than the first threshold value. Hence, the gain limiting unit **44** calculates the gain **G4b** (= **G3+ΔG**) by changing the previously calculated gain **G3** by the predetermined change limit **ΔG** to be close to the currently calculated gain **G4,** and sets the gain **G4b** as the current gain.

In this regard, it is preferable that the change limit **ΔG** be set to about **3** dB in consideration of auditory properties of human beings. In this case, it is difficult for a user to sense a change in a sound volume caused by a change in the gain, and therefore it is possible to suppress a change of the sound volume without giving strange feelings to a user.

When the gain is set by the gain setting unit **42,** the gain multiplying unit **45** reads out the audio input signals in order from the oldest from the buffering unit **41,** and multiplies the read out audio input signal with the gain inputted from the gain setting unit **42,** and outputs the result to the transmission-side communication processor **26.**

As described above, in the audio announcement terminal **2** as shown in the block diagram of **FIG. 12****,** the sound inputted from the microphone **21** is subjected to A/D conversion by the A/D converter **23,** and the sound volume level is corrected by the automatic sound volume adjuster **40,** and then process such as encryption, compression, and packetizing are performed, and finally the sound is sent via wireless communication. In the automatic sound volume adjuster **40,** each time all the audio input signals stored in the buffering unit **41** are replaced with new ones, the gain calculating unit **43** calculates the gain based on the representative value of the audio input signals stored in the buffering unit **41.**

Therefore, in contrast to a case where the gain is calculated for each sampling, it is possible to reduce an amount of processing for sound volume correction. Further, it is possible to calculate the gain from only the delay corresponding to the storage capacity of the buffering unit **41,** and therefore the delay of the output sound can be reduced. Further, the difference between the previously calculated gain and the currently calculated gain is calculated. When the absolute value of the difference is equal to or more than the first threshold value, the gain limiting unit **44** calculates the limit value by changing the previously calculated gain by the predetermined change limit so as to be close to the currently calculated gain, and uses the limit value as the current gain.

By doing so, even when the sound volume level of the input sound is sharply changed and the result of calculation of the gain changes by the first threshold value or more, the change in the gain is suppressed so that the change is not equal to or more than the predetermined change limit. Consequently, a rapid change in the sound volume of the output sound can be suppressed. In summary, the gain is adjusted by the automatic sound volume adjuster **40** so that the amplitude level of the transmission audio signal is within the predetermined range. Thus, it is possible to prevent a rapid change in the sound volume of the sound outputted from the mobile phone **6.** Further, the automatic sound volume adjuster **40** provided to the reception-side communication processor **27** adjusts the gain so that the amplitude level of the reception audio signal is within the predetermined range. Therefore, it is possible to suppress a rapid change in the sound volume of the sound outputted from the speaker **22.**

Note that, in the aforementioned operation, the audio signals are transmitted between the relay device **4** and the mobile phone **6** by way of the CMS server **7.** However, the audio signals may be directly transmitted between the relay device **4** and the mobile phone **6.**

As apparent from the above explanation, the residential security system of the present embodiment includes the following first feature.

In the first feature, the residential security system includes the sensor terminal **1,** the audio announcement terminal **2,** the master **3,** and the relay device **4.** The sensor terminal 1 is configured to detect an abnormality considered to be destructive to security of the residence **100.** The audio announcement terminal **2** includes the speaker **22** and the microphone **21** and is installed in the residence **100.** The master **3** is installed in the residence **100,** and communicates with the sensor terminal 1 and the audio announcement terminal **2.** The relay device **4** allows communication between the public telecommunication network (e.g., WAN **5**) and the master **3.** Further, when the sensor terminal **1** detects occurrence of the abnormality and outputs the announcement signal for announcing occurrence of the abnormality to the master **3,** the master **3** sends an e-mail for announcing occurrence of the abnormality to the mobile phone **6** preliminarily registered as the addressee by way of the relay device **4** and the public telecommunication network, and outputs a control signal for switching the audio announcement terminal **2** to the transmission mode to the audio announcement terminal **2.** When the reception operation is performed at the mobile phone **6** as the addressee, and the command corresponding to the reception operation is inputted into the master **3** by way of the public telecommunication network and the relay device **4,** the master **3** sends the audio signal which is converted into the electric signal by the microphone **21** of the audio announcement terminal **2** switched to the transmission mode and inputted into the master **3** from the audio announcement terminal **2,** to the mobile phone **6** as the addressee, by way of the relay device **4** and the public telecommunication network.

In other words, the residential security system includes at least one sensor terminal **1,** at least one audio announcement terminal **2,** and a master **3** which are installed in a same residence **100.** The master **3** is configured to communicate with the at least one sensor terminal **1,** the at least one audio announcement terminal **2,** and a preliminarily registered mobile phone **6.** The at least one audio announcement terminal **2** includes a speaker **22** and a microphone **21.** The at least one audio announcement terminal **2** has two communication modes which are a reception mode of outputting, from the speaker **22,** an audio signal received from the master **3,** and a transmission mode of sending an audio signal generated by the microphone **21** to the master **3.** The at least one audio announcement terminal **2** is configured to select one of the communication modes in accordance with a control signal from the master **3.** The at least one sensor terminal **1** is configured to provide information for judging occurrence of an abnormality regarding the residence **100,** to the master **3.** The master **3** is configured to, when determining based on the information from the at least one sensor terminal **1** that the abnormality has occurred, send an e-mail indicative of occurrence of the abnormality to the mobile phone **6** and send a control signal for switching the at least one audio announcement terminal **2** to the transmission mode to the at least one audio announcement terminal **2.** The master **3** is configured to, when receiving a command corresponding to a reception operation at the mobile phone **6,** send the audio signal sent from the at least one audio announcement terminal **2** in the transmission mode to the mobile phone **6.**

Further, the residential security system of the present embodiment may include the following second feature in addition to the first feature.

In the second feature, when the switching operation of the communication mode is performed at the mobile phone **6** as the addressee and the command corresponding to the switching operation is inputted into the master **3** by way of the public telecommunication network and the relay device **4,** the master **3** outputs the control signal for switching the audio announcement terminal **2** to the reception mode, to the audio announcement terminal **2.** When confirming that the audio announcement terminal **2** is switched to the reception mode, the master **3** sends the announcement signal for announcing completion of transmission preparation to the mobile phone **6** as the addressee by way of the relay device **4** and the public telecommunication network. Further, when the operation of starting the transmission is performed at the mobile phone **6** as the addressee receiving the announcement signal, the audio signal is sent from the mobile phone **6** to the audio announcement terminal **2** through the public telecommunication network, the relay device **4,** and the master **3,** and consequently the sound is outputted from the speaker **22.**

In other words, the master **3** is configured to: when receiving a command corresponding to a switching operation at the mobile phone **6** after receiving a command corresponding to a reception operation at the mobile phone **6,** send a control signal for switching the at least one audio announcement terminal **2** to the reception mode to the at least one audio announcement terminal **2;** when the at least one audio announcement terminal **2** is switched to the reception mode, send an announcement signal to the mobile phone **6;** and when receiving an audio signal from the mobile phone **6,** send the audio signal received from the mobile phone **6** to the at least one audio announcement terminal **2** in the reception mode.

Additionally, the residential security system of the present embodiment may include the following third or fourth feature in addition to the second feature.

In the third feature, a plurality of audio announcement terminals **2** are installed in the residence **100.** When the selection operation of selecting any of the audio announcement terminals **2** at the mobile phone **6** as the addressee, and the selection command corresponding to the selection operation is inputted into the master **3** by way of the public telecommunication network and the relay device **4,** the master **3** causes the speaker **22** of the audio announcement terminal **2** designated by the selection command to output sound.

In other words, the residential security system includes a plurality of audio announcement terminals **2.** The master **3** is configured to, when receiving a selection command corresponding to a selection operation of the at least one audio announcement terminal **2** at the mobile phone **6** after receiving a command corresponding to the switching operation at the mobile phone **6,** send the control signal for switching the at least one audio announcement terminal **2** to the reception mode to an audio announcement terminal **2** designated by the received selection command.

In the fourth feature, a plurality of audio announcement terminals **2** are installed in the residence **100.** When the audio signal is inputted into the master **3** from the mobile phone **6** by way of the public telecommunication network and the relay device **4,** the master **3** switches the plurality of audio announcement terminals **2** to the reception mode, and outputs the audio signal to the plurality of audio announcement terminals **2** to cause the plurality of audio announcement terminals **2** to output sound.

In other words, the residential security system includes a plurality of audio announcement terminals **2.** The master **3** is configured to, in a process of sending a control signal for switching at least one of the plurality of audio announcement terminals **2** to the reception mode to at least one of the plurality of audio announcement terminals **2,** send a control signal for switching at least one of the plurality of audio announcement terminals **2** to the reception mode to each of the plurality of audio announcement terminals **2.** The master **3** is configured to, in a process of sending the audio signal received from the mobile phone **6** to at least one of the plurality of audio announcement terminals **2,** send the audio signal received from the mobile phone **6** to each of the plurality of audio announcement terminals **2.**

Further, the residential security system of the present embodiment may include the following fifth or sixth feature.

In the fifth feature, a plurality of audio announcement terminals **2** are installed in the residence **100.** The master **3** changes the audio announcement terminal **2** switched to the transmission mode each time the predetermined time elapses.

In other words, the residential security system includes a plurality of audio announcement terminals **2.** The master **3** is configured to, in a process of sending, to the mobile phone **6,** the audio signal sent from an audio announcement terminal **2** in the transmission mode, select in turn one from the plurality of audio announcement terminals **2** as the audio announcement terminal **2** in the transmission mode, each time predetermined time elapses.

In the sixth feature, a plurality of audio announcement terminals **2** are installed in the residence **100.** The residential security system includes a plurality of human sensors each configured to detect a person around a location of a corresponding one of the plurality of audio announcement terminals **2.** When receiving the announcement signal from the sensor terminal **1,** the master **3** forms an audio communication path between the audio announcement terminal **2** around which a person is present, and the mobile phone **6** as the addressee, based on detection results of the plurality of human sensors.

In other words, the residential security system includes a plurality of audio announcement terminals **2** and a plurality of human sensors. The plurality of human sensors are individually associated with the plurality of audio announcement terminals **2.** Each of the plurality of human sensors is configured to detect a person present around a location of an associated one of the plurality of audio announcement terminals **2.** The master **3** is configured to judge, based on each detection result from the plurality of human sensors, whether a person is present around each location. The master **3** is configured to, in a process of sending a control signal for switching at least one of the plurality of audio announcement terminals **2** to the transmission mode to at least one of the plurality of audio announcement terminals **2,** send a control signal for switching at least one of the plurality of audio announcement terminals **2** to the transmission mode, to an audio announcement terminal **2** at a location which a person is judged to be present around.

Moreover, the residential security system of the present embodiment may include the following seventh feature in addition to the sixth feature.

In the seventh feature, when there are two or more audio announcement terminals **2** each at a location which a person is judged to be present around, the master **3** selects one from the two or more audio announcement terminals **2** each at a location which a person is judged to be present around, as an audio announcement terminal **2** which forms an audio communication path with the mobile phone **6,** each time predetermined time elapses.

In other words, the master **3** is configured to, when there are two or more audio announcement terminals **2** each at a location which a person is judged to be present around, in a process of sending a control signal for switching at least one of the plurality of audio announcement terminals **2** to the transmission mode to at least one of the plurality of audio announcement terminals **2,** send a control signal for switching at least one of the plurality of audio announcement terminals **2** to the transmission mode, to each of the two or more audio announcement terminals **2** each at a location which a person is judged to be present around, and in a process of sending, to the mobile phone **6,** the audio signal sent from an audio announcement terminal **2** in the transmission mode, select in turn one from the two or more audio announcement terminals **2** each at a location which a person is judged to be present around, as the audio announcement terminal **2** in the transmission mode, each time predetermined time elapses.

Note that, the residential security system of the present embodiment may include the following eighth feature.

In the eighth feature, the at least one sensor terminal **1** is configured to detect the abnormality. The at least one sensor terminal **1** is configured to, when detecting occurrence of the abnormality, output an announcement signal to the master **3** as the information. The master **3** is configured to, when receiving the announcement signal from the at least one sensor terminal **1,** determine that the abnormality has occurred.

In addition, the residential security system of the present embodiment may include any one of the following ninth to eleventh features in addition to the eighth feature.

In the ninth feature, the sensor terminal **1** is a fire alarm configured to provide a warring sound when sensing a fire. When an announcement signal of a fire is inputted into the master **3** from the fire alarm, the master 3 sends a voice message for announcing occurrence of a fire to the audio announcement terminal **2** to output the voice message from the speaker **22.**

In other words, the at least one sensor terminal 1 is a fire alarm configured to provide a warring sound when sensing a fire. The master **3** is configured to, when receiving the announcement signal from the at least one sensor terminal **1,** send a voice message for announcing occurrence of a fire to the at least one audio announcement terminal **2.** The at least one audio announcement terminal **2** is configured to, when receiving the voice message, output the voice message from the speaker **22.**

In the tenth feature, the sensor terminal **1** is a gas sensor configured to sense intended gas. When an announcement signal indicating that the gas has been sensed is inputted into the master **3** from the gas sensor, the master **3** sends a voice message to the audio announcement terminal **2** to output the voice message from the speaker **22.**

In other words, the at least one sensor terminal **1** is a gas sensor configured to sense gas. The master **3** is configured to, when receiving the announcement signal from the at least one sensor terminal **1,** send a voice message to the at least one audio announcement terminal **2.** The at least one audio announcement terminal **2** is configured to, when receiving the voice message, output the voice message from the speaker **22.**

In the eleventh feature, the sensor terminal **1** is a crime-prevention sensor configured to detect intrusion into the residence **100.** When an announcement signal indicative of detection of intrusion is inputted into the master **3** from the crime-prevention sensor, the master **3** sends a control command for outputting a menacing sound to the audio announcement terminal **2** to output the menacing sound from the speaker **22.**

In other words, the at least one sensor terminal **1** is a crime-prevention sensor configured to detect an intruder into the residence **100.** The master **3** is configured to, when receiving the announcement signal from the at least one sensor terminal **1,** send a control command for outputting a menacing sound to the at least one audio announcement terminal **2.** The at least one audio announcement terminal **2** is configured to, when receiving the control command, output the menacing sound from the speaker **22.**

Further, the residential security system of the present embodiment may include the following twelfth feature instead of the eighth feature.

In the twelfth feature, a plurality of sensor terminals **1** serving as temperature sensors configured to measure ambient temperatures are installed in the residence 100. When determining, based on detection temperatures of the plurality of temperature sensors, that a difference between the detection temperatures at the locations is greater that the predetermined threshold value and the maximum value or the minimum value of the detection temperature is out of the predetermined temperature range, the master **3** sends a control signal for outputting a warning sound to the audio announcement terminal **2** to cause the audio announcement terminal **2** to output a warning sound from the speaker **22.**

In other words, the residential security system includes a plurality of sensor terminals **1.** Each of the plurality of sensor terminals **1** is a temperature sensor configured to measure an ambient temperature. The information indicates the ambient temperatures measured by the plurality of sensor terminals **1.** The master **3** is configured to, when a difference between the ambient temperatures is greater than a predetermined threshold value and a maximum value or a minimum value of the ambient temperatures is out of a predetermined temperature range, determine that the abnormality has occurred, and send a control signal for outputting a warning sound to the at least one audio announcement terminal **2.** The at least one audio announcement terminal **2** is configured to, when receiving the control signal for outputting the warning sound, output the warning sound from the speaker **22.**

Additionally, the residential security system of the present embodiment may further include any one of the following thirteenth to fifteenth features.

In the thirteenth feature, the at least one audio announcement terminal **2** is a wall-mounted device including an engagement part **30b** to be engaged with a fixing **31** fixed to a wall **101.**

In the fourteenth feature, the at least one audio announcement terminal **2** is a pendant device including cord **35** for hanging.

In the fifteenth feature, the at least one audio announcement terminal **2** is a stationary device to be placed on a support.

Furthermore, the residential security system of the present embodiment may include the following sixteenth feature.

In the sixteenth feature, the master **3** has a function of the relay device **4,** and the master **3** doubles as the relay device **4.**

In other words, the residential security system includes a relay device **4** configured to allow communication between a public telecommunication network to which the mobile phone **6** is to be connected, and the master **3.** The master **3** is configured to function as the relay device **4.**

Moreover, the residential security system of the present embodiment may include the following seventeenth feature.

In the seventeenth feature, the audio announcement terminal **2** includes the wireless communication processor **25** configured to send to and receive from the master **3** a packetized audio signal by wireless communication. The wireless communication processor **25** includes the compression and decompression unit (the audio signal compressor **26b** and the audio signal decompressor **27b**), the encryption and decryption processing unit (the encryption processor **26d** and the decryption processor **27d**), the packet processing unit (the packetizing processor **26e** and the reassembling processor **27e**), and the wireless transceiver unit (the wireless transmitter **26f and** the wireless receiver **27f**). The packetized audio signal received by the wireless transceiver unit is reassembled by the packet processing unit, and is decrypted by the encryption and decryption processing unit, and is decompressed by the compression and decompression unit, and is outputted from the speaker **22.** The audio signal collected and converted into the electric signal by the microphone **21** is compressed by the compression and decompression unit, and is encrypted by the encryption and decryption processing unit, and is packetized by the packet processing unit, and is sent through wireless communication by the wireless transceiver unit.

In other words, the at least one audio announcement terminal **2** includes a wireless communication processor **25** configured to send to and receive from the master **3** the audio signal via wireless packet communications. The wireless communication processor **25** includes a compression and decompression unit (the audio signal compressor **26b** and the audio signal decompressor **27b**), an encryption and decryption processing unit (the encryption processor **26d** and the decryption processor **27d**), a packet processing unit (the packetizing processor **26e** and the reassembling processor **27e**), and a wireless transceiver unit (the wireless transmitter **26f and** the wireless receiver **27f**). The wireless communication processor **25** is configured to, when receiving a packet of the audio signal by the wireless transceiver unit, obtain the audio signal from the packet by the packet processing unit, and decrypt the audio signal by the encryption and decryption processing unit, and decompress the decrypted audio signal by the compression and decompression unit, and output the decompressed and decrypted audio signal from the speaker **22.** The wireless communication processor is configured to, when the audio signal is produced by the microphone **21,** compress the audio signal by the compression and decompression unit, and encrypt the compressed audio signal by the encryption and decryption processing unit, and packetize the encrypted and compressed audio signal by the packet processing unit, and send a packet of the encrypted and compressed audio signal by the wireless transceiver unit.

Additionally, the residential security system of the present embodiment may include the following eighteenth feature in addition to the seventeenth feature.

In the eighteenth feature, the at least one audio announcement terminal 2 is configured to set either a file transfer scheme of accumulating received audio signals until a total length of the received audio signals becomes equal to prescribed time and then outputting the accumulated audio signals, or a streaming scheme, as a receiving processing scheme for the audio signal sent from the master **3.**

Additionally, the residential security system of the present embodiment may include the following nineteenth or twentieth feature in addition to the eighteenth feature.

In the nineteenth feature, in the file transfer scheme, the audio signal decrypted by the encryption and decryption processing unit is accumulated in the buffering unit **27c** configured to store audio signals until a total length of the audio signal corresponds to the prescribed time. When all the audio signals are stored in the buffering unit **27c,** the audio signals read out from the buffering unit **27c** are decompressed by the compression and decompression unit and are outputted from the speaker **22.**

In other words, the wireless communication processor **25** further includes a buffering unit **27c.** The wireless communication processor is configured to, in the file transfer scheme, accumulate the audio signals decrypted by the encryption and decryption processing unit in the buffering unit **27c,** and when the total length of the audio signals accumulated in the buffering unit **27c** becomes equal to the prescribed time, read out the audio signals from the buffering unit **27c** and decompress the audio signals by the compression and decompression unit, and output the decompressed audio signals from the speaker **22.**

In the twentieth feature, in the streaming scheme, the audio signal decrypted by the encryption and decryption processing unit is stored in a corresponding region of the buffering unit **27c** used as a ring buffer in accordance with a sequence number of an audio packet. When a total amount of the audio signals accumulated in the buffering unit **27c** becomes equal to at least a maximum amount of jitter, the compression and decompression unit reads out the audio signal from the buffering unit **27c** in order from the oldest and outputs the same.

In other words, the wireless communication processor **25** further includes a buffering unit **27c.** The wireless communication processor is configured to, in the streaming scheme, use the buffering unit **27c** as a ring buffer, and store the audio signal decrypted by the encryption and decryption processing unit in a predetermined region of the buffering unit **27c** based on a sequence number of a packet of the audio signal, and when a total amount of the audio signals accumulated in the buffering unit **27c** becomes equal to at least a maximum amount of jitter, read out the audio signals from the buffering unit **27c** in order from oldest, and decompress the audio signals by the compression and decompression unit, and output the decompressed audio signals from the speaker **22.**

Note that, the residential security system of the present embodiment may include the following twenty-first feature in addition to the eighteenth or twentieth feature.

In the twenty-first feature, the packet loss calculator **27g** configured to measure a probability of occurrence of packet loss in the reception process according to the streaming scheme is provided between the buffering unit **27c** and the compression and decompression unit. The audio announcement terminal **2** sends the probability of occurrence of packet loss measured by the packet loss calculator **27g** to the master **3.**

In other words, the wireless communication processor **25** further includes a packet loss calculator **27g.** The packet loss calculator **27g** is configured to calculate a probability of occurrence of packet loss in a reception process according to the streaming scheme. The at least one audio announcement terminal **2** is configured to send the probability of occurrence of packet loss calculated by the packet loss calculator **27g** to the master **3.**

Moreover, the residential security system of the present embodiment may include at least one of the following twenty-second and twenty-third features in addition to any one of the seventeenth to twenty-first features.

In the twenty-second feature, the automatic sound volume adjuster **40** configured to adjust each of amplitude levels of the transmission audio signal and the reception audio signal to be in a predetermined range is provided to the wireless communication processor **25.**

In other words, the wireless communication processor **25** further includes an automatic sound volume adjuster **40.** The automatic sound volume adjuster **40** is configured to adjust each of an amplitude level of a reception audio signal which is the audio signal received from the master **3** and an amplitude level of a transmission audio signal which is the audio signal generated by the microphone **21,** to be in a predetermined range.

In the twenty-third feature, the packet loss compensator **27h** is provided to the wireless communication processor **25.** When packet loss occurs in the reception process of audio signals, the packet loss compensator **27h** infers an audio signal included in a missing audio packet by use of an audio signal included in an audio packet which is not missed.

In other words, the wireless communication processor **25** further includes a packet loss compensator **27h.** The packet loss compensator **27h** is configured to, when the wireless transceiver unit **25** fails to receive a packet of the audio signal, infer data of the audio signal contained in the packet which the wireless transceiver unit fails to receive, by use of data of the audio signal contained in the packet which the wireless transceiver unit **25** succeeds in receiving.

According to the present embodiment in accordance with the present invention described above, when the sensor terminal **1** detects the abnormality at the residence 100, an e-mail for announcing occurrence of the abnormality is sent from the master **3** to the mobile phone **6.** When the reception operation is performed at the mobile phone **6** receiving this e-mail, the master **3** sends the audio signal which is converted into an electric signal by the microphone **21** of the audio announcement terminal **2** switched to the transmission mode and sent to the master **3** from the same audio announcement terminal **2,** to the mobile phone **6** as the addressee by way of the relay device **4** and the public telecommunication network. Therefore, a user of the mobile phone **6** can hear sounds collected by the audio announcement terminal **2** installed in the residence **100,** and know situations inside the residence **100** based on the sounds collected inside the residence **100** in more detail.

## Claims

1. A residential security system, comprising at least one sensor terminal (1), at least one audio announcement terminal (2), and a master (3) which are installed in a same residence (100);
wherein the master (3) is configured to communicate with the at least one sensor terminal (1), and a preliminarily registered mobile phone (6);
the at least one audio announcement terminal (2) including a speaker (22) and a microphone (21);
the at least one audio announcement terminal (2) having two communication modes which are a reception mode of outputting, from the speaker (22), an audio signal received from the master (3), and a transmission mode of sending an audio signal generated by the microphone (21) to the master (3);wherein the at least one sensor terminal (1) is configured to provide information for judging occurrence of an abnormality regarding the residence (100), to the master (3); and
wherein the master (3) is configured to, when determining based on the information from the at least one sensor terminal (1) that the abnormality has occurred, send an e-mail indicative of occurrence of the abnormality to the mobile phone (6);
**characterized in that**
wherein the at least one audio announcement terminal (2) is configured to select one of the communication modes in accordance with a control signal from the master (3);
the master (3) is configured to, when determining based on the information from the at least one sensor terminal (1) that the abnormality has occurred, send a first control signal for switching the at least one audio announcement terminal (2) to the transmission mode to the at least one audio announcement terminal (2);
wherein the master (3) is configured to, when receiving a command corresponding to a reception operation at the mobile phone (6), send the audio signal sent from the at least one audio announcement terminal (2) in the transmission mode to the mobile phone (6);
the master (3) is configured to when receiving a command corresponding to a switching operation at the mobile phone (6), send, to the at least one audio announcement terminal (2), a second control signal for switching the at least one audio announcement terminal (2) to the reception mode ;
wherein the at least one audio announcement terminal (2) is configured to, when receiving the second control signal from the master (3), switch from the transmission mode to the reception mode;
wherein the master (3) is further configured to, when the at least one audio announcement terminal (2) is switched to the reception mode, send an announcement signal to the mobile phone (6); and
wherein the master (3) is further configured to, when receiving an audio signal from the mobile phone (6), send the audio signal received from the mobile phone (6) to the at least one audio announcement terminal (2) in the reception mode.

2. The residential security system according to claim 1, comprising a plurality of audio announcement terminals,
wherein the master (3) is configured to, in a process of sending, to the mobile phone (6), the audio signal sent from an audio announcement terminal (2) in the transmission mode, select in turn one from the plurality of audio announcement terminals (2) as the audio announcement terminal (2) in the transmission mode, each time predetermined time elapses.

3. The residential security system according to claim 2,
wherein the master (3) is configured to, when receiving a selection command corresponding to a selection operation of the at least one audio announcement terminal (2) at the mobile phone (6) after receiving a command corresponding to the switching operation at the mobile phone (6), send the control signal for switching the at least one audio announcement terminal (6) to the reception mode to an audio announcement terminal (2) designated by the received selection command.

4. The residential security system according to claim 1, comprising a plurality of audio announcement terminals (6)
wherein the master (3) isi configured to, in a process of sending a control signal for switching at least one of the plurality of audio announcement terminals (2) to the reception mode to at least one of the plurality of audio announcement terminals (2), send a control signal for switching at least one of the plurality of audio announcement terminals (2) to the reception mode to each of the plurality of audio announcement terminals (2), and
wherein the master (3) is configured to, in a process of sending the audio signal received from the mobile phone (6) to at least one of the plurality of audio announcement terminals (2), send the audio signal received from the mobile phone (6) to each of the plurality of audio announcement terminals (6).

5. The residential security system according to claim 1, comprising:
a plurality of audio announcement terminals (2); and
a plurality of human sensors (8a,8b,...,8n) individually associated with the plurality of audio announcement terminals (2);
wherein each of the plurality of human sensors (8a,8b,...,8n) is configured to detect a person present around a location of an associated one of the plurality of audio announcement terminals (2);
wherein the master (3) is configured to judge, based on each detection result from the plurality of human sensors (8a,8b,...,8n), whether a person is present around each location, and
the master (3) is configured to, in a process of sending a control signal for switching at least one of the plurality of audio announcement terminals (2) to the transmission mode to at least one of the plurality of audio announcement terminals (2), send a control signal for switching at least one of the plurality of audio announcement terminals (2) to the transmission mode, to an audio announcement terminal (2) at a location which a person is judged to be present around.

6. The residential security system according to claim 5, wherein:
the master (3) is configured to, when there are two or more audio announcement terminals (2) each at a location which a person is judged to be present around;
in a process of sending a control signal for switching at least one of the plurality of audio announcement terminals (2) to the transmission mode to at least one of the plurality of audio announcement terminals (2), send a control signal for switching at least one of the plurality of audio announcement terminals (2) to the transmission mode, to each of the two or more audio announcement terminals (2) each at a location which a person is judged to be present around, and
in a process of sending, to the mobile phone (6), the audio signal sent from an audio announcement terminal (2) in the transmission mode, select in turn one from the two or more audio announcement terminals (2) each at a location which a person is judged to be present around, as the audio announcement terminal (2) in the transmission mode, each time predetermined time elapses.

7. The residential security system according to claim 1, wherein:
the at least one sensor terminal (1) is configured to detect the abnormality;
the at least one sensor terminal (1) is configured to, when detecting occurrence of the abnormality, output an announcement signal to the master (3) as the information; and
the master (3) is configured to, when receiving the announcement signal from the at least one sensor terminal (1), determine that the abnormality has occurred.

8. The residential security system according to claim 7, wherein:
the at least one sensor terminal (1) is a fire alarm (1a) configured to provide a warring sound when sensing a fire;
the master (3) is configured to, when receiving the announcement signal from the at least one sensor terminal (1), send a voice message for announcing occurrence of a fire to the at least one audio announcement terminal (2); and
the at least one audio announcement terminal (2) is configured to, when receiving the voice message, output the voice message from the speaker (22).

9. The residential security system according to claim 7, wherein:
the at least one sensor terminal (1) is a gas sensor (1b) configured to sense gas;
the master (3) is configured to, when receiving the announcement signal from the at least one sensor terminal (1), send a voice message to the at least one audio announcement terminal (2); and
the at least one audio announcement terminal (2) is configured to, when receiving the voice message, output the voice message from the speaker (22).

10. The residential security system according to claim 7, wherein:
the at least one sensor terminal (1) is a crime-prevention sensor (1d) configured to detect an intruder into the residence;
the master (3) is configured to, when receiving the announcement signal from the at least one sensor terminal (1), send a control command for outputting a menacing sound to the at least one audio announcement terminal (2); and
the at least one audio announcement terminal (2) is configured to, when receiving the control command, output the menacing sound from the speaker (22).

11. The residential security system according to claim 7, comprising a plurality of sensor terminals (1);
wherein each of the plurality of sensor terminals (1) is a temperature sensor (1c) configured to measure an ambient temperature;
the information indicating the ambient temperatures measured by the plurality of sensor terminals (1);
wherein the master (3) is configured to, when a difference between the ambient temperatures is greater than a predetermined threshold value and a maximum value or a minimum value of the ambient temperatures is out of a predetermined temperature range, determine that the abnormality has occurred, and send a control signal for outputting a warning sound to the at least one audio announcement terminal (2), and
wherein the at least one audio announcement terminal (2) is configured to, when receiving the control signal for outputting the warning sound, output the warning sound from the speaker (22).

12. The residential security system according to claim 1, wherein the at least one audio announcement terminal (2) is a wall-mounted device including an engagement part (30b) to be engaged with a fixing (31) fixed to a wall.

13. The residential security system according to claim 1, wherein the at least one audio announcement terminal (2) is a pendant device including cord (35) for hanging.

14. The residential security system according to claim 1, wherein the at least one audio announcement terminal (2) is a stationary device to be placed on a support.

15. The residential security system according to claim 1, further comprising a relay device (4) configured to allow communication between a public telecommunication network to which the mobile phone (6) is to be connected, and the master (3),
wherein the master (3) is configured to function as the relay device (4).

## Patentansprüche

1. Wohnungssicherheitssystem, welches mindestens einen Sensor-Terminal (1), mindestens einen Audioansage-Terminal (2) und einen Master (3), welche in einer gleichen Wohnung (100) installiert sind, umfasst;
wobei der Master (3) konfiguriert ist, um mit dem mindestens einen Sensor-Terminal (1) und einem zuvor registrierten Mobiltelefon (6)zu kommunizieren;
wobei der mindestens eine Audioansage-Terminal (2) einen Lautsprecher (22) und ein Mikrofon (21) beinhaltet;
wobei der mindestens eine Audioansage-Terminal (2) zwei Kommunikationsmodi aufweist, bei welchen es sich um einen Empfangsmodus zum Ausgebeneines vom Master (3) empfangenen Audiosignals aus dem Lautspecher (22) und einen Sendemodus zum Senden eines durch das Mikrofon (21) erzeugten Audiosignals, an den Master (3) handelt;
wobei der mindestens eine Sensor-Terminal (1) konfiguriert ist zum Bereitstellen einer Information zum Beurteilen des Auftretens einer Abnormalität hinsichtlich der Wohnung (100) an den Master (3); und
wobei der Master (3), konfiguriert ist, um eine E-Mail, die das Auftreten der Abnormalität angibt, an das Mobiltelefon (6) zu senden, wenn basierend auf der Information von dem mindestens einen Sensor-Terminal (1) bestimmt wird, dass die Abnormalität aufgetreten ist,
**dadurch gekennzeichnet, dass**
der mindestens eine Audioansage-Terminal (2) konfiguriert ist, um eine der Kommunikationsmodi in Übereinstimmung mit einem Steuersignal vom Master (3)auszuwählen;
der Master (3) konfiguriert ist, um ein erstes Steuersignal zum Umschalten des mindestens einen Audioansage-Terminals (2) in den Sendemodus an den mindestens einen Audioansage-Terminal (2) zu senden, wenn basierend auf der Information von dem mindestens einen Sensor-Terminal (1) bestimmt wird, dass die Abnormalität aufgetreten ist;
wobei der Master (3)konfiguriert ist, um das Audiosignal, das von dem mindestens einen Audioansage-Terminal (2) im Sendemodus gesendet wird, an das Mobiltelefon (6)zu senden, wenn er einen Befehl empfängt, der einem Empfangsvorgang an dem Mobiltelefon (6) entspricht;
der Master (3)konfiguriert ist, an das mindestens eine Audioansage-Terminal (2), eines zweiten Steuersignals zum Umschalten des mindestens einen Audioansage-Terminals (2) in den Empfangsmodus zu senden, wenn er einen Befehl empfängt, der einem Umschaltvorgang an dem Mobiltelefon (6) entspricht;
wobei der mindestens eine Audioansage-Terminal (2) konfiguriert ist, um aus dem Sendemodus in den Empfangsmodus umzuschalten, wenn er das zweite Steuersignal vom Master (3) empfängt;
wobei der Master (3) ferner konfiguriert ist, um ein Ansagesignal an das Mobiltelefon (6)zu senden, wenn der mindestens eine Audioansage-Terminal (2) in den Empfangsmodus umgeschaltet wird; und
wobei der Master (3) ferner konfiguriert ist, um das Audiosignal, das von dem Mobiltelefon (6) empfangen wird, an den mindestens einen Audioansage-Terminal (2) im Empfangsmodus zu senden, wenn er ein Audiosignal von dem Mobiltelefon (6) empfängt.

2. Wohnungssicherheitssystem nach Anspruch 1, welches mehrere Audioansage-Terminals umfasst,
wobei der Master (3), in einem Prozess zum Senden des Audiosignals an das Mobiltelefon (6), das von einem Audioansage-Terminal (2) im Sendemodus gesendet wird, konfiguriert ist, als Reaktion darauf, eines aus den mehreren Audioansage-Terminals (2) als den Audioansage-Terminal (2) im Sendemodus, jedes Mal auszuwählen, wenn eine vorgegebene Zeit verstreicht.

3. Wohnungssicherheitssystem nach Anspruch 2,
wobei der Master (3), wenn er einen Auswahlbefehl empfängt, der einem Auswahlvorgang des mindestens einen Audioansage-Terminals (2) an dem Mobiltelefon (6) entspricht, nachdem er einen Befehl empfangen hat, der dem Schaltvorgang an dem Mobiltelefon (6) entspricht, konfiguriert ist, um das Steuersignal zum Umschalten des mindestens einen Audioansage-Terminals (6) in den Empfangsmodus an einen Audioansage-Terminal (2), der durch den empfangenen Auswahlbefehl bezeichnet wird, zu senden.

4. Wohnungssicherheitssystem nach Anspruch 1, welches mehrere Audioansage-Terminals (6) umfasst,
wobei der Master (3), in einem Prozess des Sendens eines Steuersignals zum Umschalten mindestens eines der mehreren Audioansage-Terminals (2) in den Empfangsmodus an mindestens einen der mehreren Audioansage-Terminals (2), konfiguriert ist, ein Steuersignal zum Umschalten mindestens eines der mehreren Audioansage-Terminals (2) in den Empfangsmodus an jeden der mehreren Audioansage-Terminals (2)zu senden und wobei der Master (3), in einem Prozess des Sendens des Audiosignals, das von dem Mobiltelefon (6) empfangen wird, an mindestens einen der mehreren Audioansage-Terminals (2), konfiguriert ist, das Audiosignal, das von dem Mobiltelefon (6) empfangen wird, an jeden der mehreren Audioansage-Terminals (6)zu senden.

5. Wohnungssicherheitssystem nach Anspruch 1, welches Folgendes umfasst:
mehrere Audioansage-Terminals (2); und
mehrere Personensensoren (8a, 8b, ..., 8n), die individuell mit den mehreren Audioansage-Terminals (2) assoziiert sind;
wobei jeder der mehreren Personensenoren(8a, 8b, ..., 8n) konfiguriert ist zum Erkennen einer Person, die sich rund um eine Position eines assoziierten der mehreren Audioansage-Terminals (2) befindet;
wobei der Master (3) konfiguriert ist zum Beurteilen, basierend auf jedem Erkennungsergebnis von den mehreren Personensensoren (8a, 8b, ..., 8n), ob sich eine Person rund um jede Position befindet, und
der Master (3), in einem Prozess des Sendens eines Steuersignals zum Umschalten mindestens eines der mehreren Audioansage-Terminals (2) in den Sendemodus an mindestens einen der mehreren Audioansage-Terminals (2), konfiguriert ist zum Senden eines Steuersignals zum Umschalten mindestens eines der mehreren Audioansage-Terminals (2) in den Sendemodus an einen Audioansage-Terminal (2) an einer Position, von der beurteilt wird, dass sich um sie herum eine Person befindet.

6. Wohnungssicherheitssystem nach Anspruch 5, wobei:
der Master (3), wenn es zwei oder mehr Audioansage-Terminals (2) jeweils an einer Position, von der beurteilt wird, dass sich um sie herum eine Person befindet, gibt,
in einem Prozess des Sendens eines Steuersignals zum Umschalten mindestens eines der mehreren Audioansage-Terminals (2) in den Sendemodus an mindestens einen der mehreren Audioansage-Terminals (2), konfiguriert ist zum Senden eines Steuersignals zum Umschalten mindestens eines der mehreren Audioansage-Terminals (2) in den Sendemodus an jeden der zwei oder mehr Audioansage-Terminals (2) jeweils an einer Position, von der beurteilt wird, dass sich um sie herum eine Person befindet, und
in einem Prozess des Sendens, an das Mobiltelefon (6), des Audiosignals, das von einem Audioansage-Terminal (2) im Sendemodus gesendet wird, konfiguriert ist zum Auswählen, als Reaktion darauf, eines aus den zwei oder mehr Audioansage-Terminals (2) jeweils an einer Position, von der beurteilt wird, dass sich um sie herum eine Person befindet, als den Audioansage-Terminal (2) im Sendemodus, jedes Mal, wenn eine vorgegebene Zeit verstreicht.

7. Wohnungssicherheitssystem nach Anspruch 1, wobei:
der mindestens eine Sensor-Terminal (1) konfiguriert ist zum Erkennen der Abnormalität;
der mindestens eine Sensor-Terminal (1), wenn er das Auftreten der Abnormalität erkennt, konfiguriert ist, ein Ansagesignal an den Master (3) als die Information auszugeben; und
der Master (3), wenn er das Ansagesignal von dem mindestens einen Sensor-Terminal (1) empfängt, konfiguriert ist, festzustellen, dass die Abnormalität aufgetreten ist.

8. Wohnungssicherheitssystem nach Anspruch 7, wobei:
der mindestens eine Sensor-Terminal (1) ein Brandmelder (1a) ist, der konfiguriert ist, einen Warnton bereitzustellen, wenn er einen Brand wahrnimmt;
der Master (3) konfiguriert ist, eine Sprachnachricht zum Mitteilen des Auftretens eines Brandes an den mindestens einen Audioansage-Terminal (2)zu senden, wenn er das Ansagesignal von dem mindestens einen Sensor-Terminal (1) empfängt,
der mindestens eine Audioansage-Terminal (2) konfiguriert ist, die Sprachnachricht aus dem Lautsprecher (22) auszugeben, wenn er die Sprachnachricht empfängt.

9. Wohnungssicherheitssystem nach Anspruch 7, wobei:
der mindestens eine Sensor-Terminal (1) ein Gassensor (1b) ist, der zum Wahrnehmen von Gas konfiguriert ist;
der Master (3) konfiguriert ist, eine Sprachnachricht an den mindestens einen Audioansage-Terminal (2) zu senden, wenn er das Ansagesignal von dem mindestens einen Sensor-Terminal (1) empfängt; und
der mindestens eine Audioansage-Terminal (2) konfiguriert ist die Sprachnachricht aus dem Lautsprecher (22)auszugeben, wenn er die Sprachnachricht empfängt.

10. Wohnungssicherheitssystem nach Anspruch 7, wobei:
der mindestens eine Sensor-Terminal (1) ein Verbrechenspräventionssensor (1d) ist, der konfiguriert ist, einen Einbrecher in der Wohnung zu erkennen;
der Master (3), wenn er das Ansagesignal von dem mindestens einen Sensor-Terminal (1) empfängt, konfiguriert ist, einen Steuerbefehl zum Ausgeben eines abschreckenden Tones an den mindestens einen Audioansage-Terminal (2)zu senden; und
der mindestens eine Audioansage-Terminal (2) konfiguriert ist, den abschreckenden Ton aus dem Lautsprecher (22) auszugeben, wenn er den Steuerbefehl empfängt.

11. Wohnungssicherheitssystem nach Anspruch 7, welches mehrere Sensor-Terminals (1) umfasst;
wobei jeder der mehreren Sensor-Terminals (1) ein Temperatursensor (1c) ist, der zum Messen einer Umgebungstemperatur konfiguriert ist;
die Information die Umgebungstemperatur angibt, die durch die mehreren Sensor-Terminals (1) gemessen wird;
wobei der Master (3), wenn eine Differenz zwischen den Umgebungstemperaturen höher als ein vorgegebener Schwellenwert ist und ein Maximalwert oder ein Minimalwert der Umgebungstemperaturen außerhalb eines vorgegebenen Temperaturbereiches liegt, konfiguriert ist, festzustellen, dass die Abnormalität aufgetreten ist, und ein Steuersignal zum Ausgeben eines Warntons an den mindestens einen Audioansage-Terminal (2) zu senden, und
wobei der mindestens eine Audioansage-Terminal (2), konfiguriert ist, den Warnton aus dem Lautsprecher (22)auszugeben, wenn er das Steuersignal zum Ausgeben des Warntones empfängt.

12. Wohnungssicherheitssystem nach Anspruch 1, wobei das mindestens eine Audioansage-Terminal (2) ein an der Wand angebrachtes Gerät ist, das einen Verbindungsteil (30b) beinhaltet, der mit einer Befestigung (31), die an einer Wand befestigt ist, zu verbinden ist.

13. Wohnungssicherheitssystem nach Anspruch 1, wobei der mindestens eine Audioansage-Terminal (2) ein hängendes Gerät ist, das eine Schnur (35) zum Aufhängen beinhaltet.

14. Wohnungssicherheitssystem nach Anspruch 1, wobei der mindestens eine Audioansage-Terminal (2) ein stationäres Gerät ist, das in einer Halterung zu platzieren ist.

15. Wohnungssicherheitssystem nach Anspruch 1, welches ferner ein Weiterleitungsgerät (4) umfasst, das konfiguriert ist, eine Kommunikation zwischen einem öffentlichen Telekommunikationsnetz, mit welchem sich das Mobiltelefon (6) verbinden soll, und dem Master (3)zu ermöglichen;
wobei der Master (3) konfiguriert ist, als das Weiterleitungsgerät (4) zu dienen.

## Revendications

1. Système de sécurité résidentielle, comprenant au moins une borne de capteur (1), au moins une borne d'annonce audio (2), et un dispositif maître (3) qui sont installés dans une même résidence (100) ;
dans lequel le dispositif maître (3) est configuré de manière à communiquer avec ladite au moins une borne de capteur (1), et un téléphone mobile préalablement enregistré (6) ;
ladite au moins une borne d'annonce audio (2) incluant un haut-parleur (22) et un microphone (21) ;
ladite au moins une borne d'annonce audio (2) présentant deux modes de communication, lesquels correspondent à un mode de réception consistant à fournir en sortie, à partir du haut-parleur (22), un signal audio reçu en provenance du dispositif maître (3), et à un mode de transmission consistant à envoyer un signal audio généré par le microphone (21), au dispositif maître (3); dans lequel ladite au moins une borne de capteur (1) est configurée de manière à fournir, au dispositif maître (3), des informations permettant de déterminer l'occurrence d'une anomalie concernant la résidence (100) ; et
dans lequel le dispositif maître (3) est configuré de manière à, lorsqu'il est déterminé, sur la base des informations provenant de ladite au moins une borne de capteur (1), que l'anomalie s'est produite, envoyer un courriel indiquant l'occurrence de l'anomalie au téléphone mobile (6) ;
**caractérisé en ce que** :
ladite au moins une borne d'annonce audio (2) est configurée de manière à sélectionner l'un des modes de communication selon un signal de commande en provenance du dispositif maître (3) ;
le dispositif maître (3) est configuré de manière à, lorsqu'il est déterminé, sur la base des informations provenant de ladite au moins une borne de capteur (1), que l'anomalie s'est produite, envoyer un premier signal de commande pour commuter ladite au moins une borne d'annonce audio (2) sur le mode de transmission, à ladite au moins une borne d'annonce audio (2) ;
dans lequel le dispositif maître (3) est configuré de manière à, lors de la réception d'une instruction correspondant à une opération de réception au niveau du téléphone mobile (6), envoyer le signal audio, envoyé à partir de ladite au moins une borne d'annonce audio (2) dans le mode de transmission, au téléphone mobile (6) ;
le dispositif maître (3) est configuré de manière à, lors de la réception d'une instruction correspondant à une opération de commutation sur le téléphone mobile (6), envoyer, à ladite moins une borne d'annonce audio (2), un second signal de commande pour commuter ladite au moins une borne d'annonce audio (2) sur le mode de réception ;
dans lequel ladite au moins une borne d'annonce audio (2) est configurée de manière à, lors de la réception du second signal de commande en provenance du dispositif maître (3), commuter du mode de transmission au mode de réception ;
dans lequel le dispositif maître (3) est en outre configuré de manière à, lorsque ladite au moins une borne d'annonce audio (2) est commutée sur le mode de réception, envoyer un signal d'annonce au téléphone mobile (6) ; et
dans lequel le dispositif maître (3) est en outre configuré de manière à, lors de la réception d'un signal audio en provenance du téléphone mobile (6), envoyer le signal audio reçu en provenance du téléphone mobile (6) à ladite au moins une borne d'annonce audio (2) dans le mode de réception.

2. Système de sécurité résidentielle selon la revendication 1, comprenant une pluralité de bornes d'annonce audio ;
dans lequel le dispositif maître (3) est configuré de manière à, dans le cadre d'un processus consistant à envoyer, au téléphone mobile (6), le signal audio envoyé à partir d'une borne d'annonce audio (2) dans le mode de transmission, sélectionner, tour à tour, une borne parmi la pluralité de bornes d'annonce audio (2) en tant que la borne d'annonce audio (2) dans le mode de transmission, à chaque fois qu'un temps prédéterminé s'écoule.

3. Système de sécurité résidentielle selon la revendication 2,
dans lequel le dispositif maître (3) est configuré de manière à, lors de la réception d'une instruction de sélection correspondant à une opération de sélection de ladite au moins une borne d'annonce audio (2) sur le téléphone mobile (6), suite à la réception d'une instruction correspondant à l'opération de commutation au niveau du téléphone mobile (6), envoyer le signal de commande pour commuter ladite au moins une borne d'annonce audio (6) sur le mode de réception, à une borne d'annonce audio (2) désignée par l'instruction de sélection reçue.

4. Système de sécurité résidentielle selon la revendication 1, comprenant une pluralité de bornes d'annonce audio (6),
dans lequel le dispositif maître (3) est configuré de manière à, dans le cadre d'un processus consistant à envoyer un signal de commande pour commuter au moins l'une de la pluralité de bornes d'annonce audio (2) sur le mode de réception, à au moins l'une de la pluralité de bornes d'annonce audio (2), envoyer un signal de commande pour commuter au moins l'une de la pluralité de bornes d'annonce audio (2) sur le mode de réception, à chaque borne de la pluralité de bornes d'annonce audio (2) ; et dans lequel le dispositif maître (3) est configuré de manière à, dans le cadre d'un processus consistant à envoyer le signal audio reçu en provenance du téléphone mobile (6) à au moins l'une de la pluralité de bornes d'annonce audio (2), envoyer le signal audio reçu en provenance du téléphone mobile (6) à chaque borne de la pluralité de bornes d'annonce audio (6).

5. Système de sécurité résidentielle selon la revendication 1, comprenant :
une pluralité de bornes d'annonce audio (2) ; et
une pluralité de capteurs de présence humaine (8a, 8b, ..., 8n) associés individuellement à la pluralité de bornes d'annonce audio (2) ;
dans lequel chaque capteur de la pluralité de capteurs de présence humaine (8a, 8b, ..., 8n) est configuré de manière à détecter la présence d'une personne à proximité d'un emplacement d'une borne associée parmi la pluralité de bornes d'annonce audio (2) ;
dans lequel le dispositif maître (3) est configuré de manière à déterminer, sur la base de chaque résultat de détection provenant de la pluralité de capteurs de présence humaine (8a, 8b, ..., 8n), si une personne est présente à proximité de chaque emplacement ; et
le dispositif maître (3) est configuré de manière à, dans le cadre d'un processus consistant à envoyer un signal de commande pour commuter au moins l'une de la pluralité de bornes d'annonce audio (2) sur le mode de transmission, à au moins l'une de la pluralité de bornes d'annonce audio (2), envoyer un signal de commande pour commuter au moins l'une de la pluralité de bornes d'annonce audio (2) sur le mode de transmission, à une borne d'annonce audio (2) située à un emplacement à proximité duquel une personne est considérée comme étant présente.

6. Système de sécurité résidentielle selon la revendication 5, dans lequel :
le dispositif maître (3) est configuré de manière à, lorsqu'il existe deux bornes d'annonce audio (2) ou plus situées chacune à un emplacement à proximité duquel une personne est considérée comme étant présente :
dans le cadre d'un processus consistant à envoyer un signal de commande pour commuter au moins l'une de la pluralité de bornes d'annonce audio (2) sur le mode de transmission, à au moins l'une de la pluralité de bornes d'annonce audio (2), envoyer un signal de commande pour commuter au moins l'une de la pluralité de bornes d'annonce audio (2) sur le mode de transmission, à chacune des deux bornes d'annonce audio (2) ou plus situées chacune à un emplacement à proximité duquel une personne est considérée comme étant présente ; et
dans le cadre d'un processus consistant à envoyer, au téléphone mobile (6), le signal audio envoyé à partir d'une borne d'annonce audio (2) dans le mode de transmission, sélectionner, tour à tour, l'une parmi les deux bornes d'annonce audio (2) ou plus qui sont chacune situées à un emplacement à proximité duquel une personne est considérée comme étant présente, en tant que la borne d'annonce audio (2) dans le mode de transmission, à chaque fois que le temps prédéterminé s'écoule.

7. Système de sécurité résidentielle selon la revendication 1, dans lequel :
ladite au moins une borne de capteur (1) est configurée de manière à détecter l'anomalie ;
ladite au moins une borne de capteur (1) est configurée de manière à, lors de la détection de l'occurrence de l'anomalie, fournir en sortie un signal d'annonce au dispositif maître (3) sous la forme des informations ; et
le dispositif maître (3) est configuré de manière à, lors de la réception du signal d'annonce en provenance de ladite au moins une borne de capteur (1), déterminer que l'anomalie s'est produite.

8. Système de sécurité résidentielle selon la revendication 7, dans lequel :
ladite au moins une borne de capteur (1) est une alarme incendie (1a) configurée de manière à fournir un avertissement sonore lors de la détection d'un incendie ;
le dispositif maître (3) est configuré de manière à, lors de la réception du signal d'annonce en provenance de ladite au moins une borne de capteur (1), envoyer un message vocal destiné à annoncer l'occurrence d'un incendie à ladite au moins une borne d'annonce audio (2) ; et
ladite au moins une borne d'annonce audio (2) est configurée de manière à, lors de la réception du message vocal, fournir en sortie le message vocal à partir du haut-parleur (22).

9. Système de sécurité résidentielle selon la revendication 7, dans lequel :
ladite au moins une borne de capteur (1) est un capteur de gaz (1b) configuré de manière à détecter du gaz ;
le dispositif maître (3) est configuré de manière à, lors de la réception du signal d'annonce en provenance de ladite au moins une borne de capteur (1), envoyer un message vocal à ladite au moins une borne d'annonce audio (2) ; et
ladite au moins une borne d'annonce audio (2) est configurée de manière à, lors de la réception du message vocal, fournir en sortie le message vocal à partir du haut-parleur (22).

10. Système de sécurité résidentielle selon la revendication 7, dans lequel :
ladite au moins une borne de capteur (1) est un capteur de prévention de la criminalité (1d) configuré de manière à détecter un intrus dans la résidence ;
le dispositif maître (3) est configuré de manière à, lors de la réception du signal d'annonce en provenance de ladite au moins une borne de capteur (1), envoyer une instruction de commande pour fournir en sortie un son menaçant à ladite au moins une borne d'annonce audio (2) ; et
ladite au moins une borne d'annonce audio (2) est configurée de manière à, lors de la réception de l'instruction de commande, fournir en sortie le son menaçant à partir du haut-parleur (22).

11. Système de sécurité résidentielle selon la revendication 7, comprenant une pluralité de bornes de capteur (1) ;
dans lequel chaque borne de la pluralité de bornes de capteur (1) correspond à un capteur de température (1c) configuré de manière à mesurer une température ambiante ;
les informations indiquant les températures ambiantes mesurées par la pluralité de bornes de capteur (1) ;
dans lequel le dispositif maître (3) est configuré de manière à, lorsqu'une différence entre les températures ambiantes est supérieure à une valeur de seuil prédéterminée et qu'une valeur maximale ou une valeur minimale des températures ambiantes se situe hors d'une plage de température prédéterminée, déterminer que l'anomalie s'est produite, et envoyer un signal de commande pour fournir en sortie un avertissement sonore à ladite au moins une borne d'annonce audio (2) ; et
dans lequel ladite au moins une borne d'annonce audio (2) est configurée de manière à, lors de la réception du signal de commande pour fournir en sortie l'avertissement sonore, fournir en sortie l'avertissement sonore à partir du haut-parleur (22).

12. Système de sécurité résidentielle selon la revendication 1, dans lequel ladite au moins une borne d'annonce audio (2) est un dispositif mural incluant une partie de mise en prise (30b) destinée à être mise en prise avec une fixation (31) fixée à un mur.

13. Système de sécurité résidentielle selon la revendication 1, dans lequel ladite au moins une borne d'annonce audio (2) est un dispositif suspendu incluant un cordon (35) de suspension.

14. Système de sécurité résidentielle selon la revendication 1, dans lequel ladite au moins une borne d'annonce audio (2) est un dispositif stationnaire destiné à être placé sur un support.

15. Système de sécurité résidentielle selon la revendication 1, comprenant en outre un dispositif de relais (4) configuré de manière à permettre une communication entre un réseau de télécommunication public auquel le téléphone mobile (6) doit être connecté, et le dispositif maître (3) ;
dans lequel le dispositif maître (3) est configuré de manière à fonctionner en tant que le dispositif de relais (4).
